# EUROPEAN PATENT SPECIFICATION

(11) **EP 4 248 288 B1**
(45) Date of publication and mention of the grant of the patent: **28.08.2024**
(21) Application number: 21815793.1
(22) Date of filing: 03.11.2021
(51) Int. Cl.: G05D 1/00, A47L 9/28, A47L 11/40, G06Q 10/0631

(54) **SCHEDULING OF MOBILE ROBOT MISSIONS**
PLANUNG VON MISSIONEN MOBILER ROBOTER
PLANIFICATION DE MISSIONS DE ROBOT MOBILE

(30) Priority: 17.11.2020 US 202016950226
(43) Date of publication of application: 27.09.2023
(73) Proprietor: iRobot Corporation, Bedford, Massachusetts 01730 (US)
(72) Inventor: CASE, Shannon Amelia, Woburn, Massachusetts 01801 (US); WONG, Alex, Somerville, Massachusetts 02145 (US); GONZALES-NEAL, Josua, Allston, Massachusetts 02134 (US); PALAFOX, David C., Woburn, Massachusetts 01801 (US); JACKSON, James, Melrose, Massachusetts 02176 (US); CUNEO, Nick, Melrose, Massachusetts 02176 (US); SEAGREN, Josie-Dee, Cambridge, Massachusetts 02139 (US); LICEAGA, Victoria, Cambridge, Massachusetts 02140 (US); BUTTERWORTH, Craig Michael, Arlington, Massachusetts 02476 (US); TAKA, Orjeta, Los Angeles, California 90017 (US); JONES, Christopher V., Woburn, Massachusetts 01801 (US); BARON, Steven J., Nashua, New Hampshire 03062 (US); MCSWEENEY, David M., Reading, Massachusetts 01864 (US); DREW, Kenrick E., Northborough, Massachusetts 01532 (US); SCHNEIDER, Ryan, Burlington, Massachusetts 01803 (US); VANDERMEULEN, Isaac, Pasadena, California 91105 (US); FOSTER, Michael, Stoneham, Massachusetts 02180 (US)
(74) Representative: Peterreins Schley
(86) International application number: PCT/US2021/057810
(87) International publication number: WO 2022/108756

(56) References cited:
- EP-A1- 3 508 937
- US-A1- 2014 207 282
- US-A1- 2016 121 479

## Description

### PRIORITY APPLICATIONS

This application claims the benefit of priority to U.S. Patent Application Serial No. 16/950,226, filed November 17, 2020.

### TECHNICAL FIELD

This document relates generally to mobile robots and, more particularly, to systems, devices, and methods for scheduling and controlling a mobile robot based on user location, user behavior, home status, or other contextual information.

### BACKGROUND

Autonomous mobile robots can move about an environment, and perform several functions and operations in a variety of categories, including but not limited to security operations, infrastructure or maintenance operations, navigation or mapping operations, inventory management operations, and robot/human interaction operations. Some mobile robots, known as cleaning robots, can autonomously perform cleaning tasks within an environment, e.g., a home. Many kinds of cleaning robots are autonomous to some degree and in different ways. For example, a cleaning robot can conduct cleaning missions, where the robot traverses and simultaneously ingests (e.g , vacuums) debris from the floor surface of their environment.

Some mobile robots are capable of storing a map of the robot environment. The mobile robot can use the map to fulfill its goals such as path planning, or navigating the mobile robot in the environment to perform a mission such as a cleaning mission US 2016/121479 A1 discloses a mobile device being connected with the robot system, but the mobile device is not monitored to detect when the user enters or exits the pre-defined geographical zone (e.g., their home).

### SUMMARY

An autonomous mobile robot (hereinafter the "mobile robot") may be controlled locally (e.g. via controls on the robot) or remotely (e.g. via a remote mobile device) to move about an environment. In an example of remote mission scheduling and robot control, a mobile application, such as implemented in a mobile device (e.g., a mobile phone), may display various information organized in at-a-glance views. A user may use the mobile application to manage (e.g., add or remove) one or more mobile robots such as in the user's home, and monitor the operating status of a mobile robot. Additionally, the user may use the mobile application to create and maintain a personalized mission routine. The mission routine may be represented by an editable schedule, including time and/or order, for performing one or more tasks, such as cleaning one or more rooms or floor surface areas of the user's home. The mission routine or a task therein may be characterized by, or made reference to, user experience such as time, pattern, or manner of using a room or interacting with an object therein, user daily routines, or user behavior. The mobile application may display, such as on the mobile device, information about the mission routine, and allow a user to monitor the progress of the mission being executed. A. user may make changes to a task as it is being executed. In various examples, the mobile application may also display a map on the user interface, such as one representing a floorplan of an area where the mission is performed. Location and operating status of the robot, progress of the mission or a task therein, among other information, may be displayed during the cleaning mission. A user may use the mobile application to generate or update a map, create new regions, add or remove objects, or providing semantic annotations to the objects on the map. The user may also control the operation of the mobile robot by adjusting a navigation parameter or a mission scheduling parameter, such as time or order of one or more tasks in a mission routine.

This document describes systems, devices, and methods for scheduling a mission for a mobile robot and controlling the mobile robot to execute the mission, such as traversing rooms of a user's home and clean floor areas therein. The scheduling of the mission can be based on user location (e.g., with respect to user's residence), user behavior, or contextual information. According to one example, a mobile cleaning robot comprises a drive system to move the mobile cleaning robot about an environment in a user's residence, and a controller circuit to receive an indication of the user entering or exiting a pre-defined geographical zone with respect to the location of the user's residence. The pre-defined geographical zone, also referred to as a geofence, defines virtual boundaries around the location of the user's residence. Location and geofencing services, which may be implemented in a mobile device (e.g., a mobile phone) in a form of mobile application, may be used to automatically determine if and when the mobile device (and thus the user) enters or exits the geofence. Based on such indication of the user entering or exiting the geofence, the controller circuit may generate a motion control signal to navigate the mobile cleaning robot to conduct a mission in the environment. For example, in response to an indication of the mobile device (and thus the user) exiting the geofence, the mobile cleaning robot may initiate a cleaning mission. Additionally or alternatively, in response to an indication of the mobile device (and thus the user) entering the geofence, the mobile cleaning robot may be triggered to abort, suspend, pause, or postpone an unfinished mission.

The mission control signal may activate the mobile cleaning robot to conduct one or more mission routines in the environment. According to an example, a user may schedule a Guest Routine that includes a mission with a time constraint for completion, also referred to as a time-boxed mission. An objective of the Guest Routine is to prioritize certain areas with a time limit (such as defined by the time-boxed mission) over other areas, such that the mobile cleaning robot may clean the high-priority areas first. The mobile cleaning robot may receive information about a pre-set time window for performing the time-boxed mission, and generate a mission control signal to navigate the mobile cleaning robot in the environment to conduct the time-boxed mission during the time window, and to stop performing the mission at the expiration of the time window. The mobile cleaning robot may, automatically or under a user control, operate in a turbo cleaning mode, which refers to mobile robot behaviors intended to clean quickly and/or selectively at the expense of cleaning thoroughly, particularly under the time constraint. The turbo mode may help avoid or reduce the chance of mission incompleteness, while maximizing visible areas cleaned under the time constraint. The scope of the present disclosure is defined by the appended claims.

### BRIEF DESCRIPTION OF THE DRAWINGS

Various embodiments are illustrated by way of example in the figures of the accompanying drawings. Such embodiments are demonstrative and not intended to be exhaustive or exclusive embodiments of the present subject matter.
FIGS. 1, 2A, and 2B are side cross-sectional, bottom, and top perspective views of a mobile robot.
FIG. 3 is a diagram illustrating an example of a control architecture for operating a mobile cleaning robot.
FIG. 4A is a diagram illustrating an example of a communication network in which a mobile cleaning robot operates and data transmission in the network.
FIG. 4B is a diagram illustrating an exemplary process of exchanging information between the mobile robot and other devices in a communication network.
FIG. 5A is a diagram illustrating an example of a mobile robot system for automatic mission scheduling and robot control.
FIG. 5B is a diagram illustrating an example of a turbo mode of cleaning that may be used by a mobile cleaning robot.
FIG. 6A illustrates an example of a user interface (UI) of a mobile device for scheduling a mission based on geofencing, smart devices, or a home automation ecosystem.
FIG. 6B illustrates an example of a UI of a mobile device for creating daily schedules of time-based or event-triggered missions.
FIG. 6C illustrates an example of a UI of a mobile device for viewing the history of a scheduled smart home routine starting a mission for a mobile cleaning robot.
FIGS. 6D, 6E, and 6F illustrate examples of a UI of a mobile device for setting up robot and home routines including Away-From-Home Routine, Return-Home Routine, and Do-Not-Disturb Routine.
FIG. 6G illustrates an example of a UI of a mobile device for scheduling a Guest Routine that involves a time-boxed mission.
FIG. 7 is a flow diagram illustrating an example of a method of generating and managing a mission routine for automated robot scheduling and control.
FIG. 8 is a block diagram illustrating an example machine upon which any one or more of the techniques (e.g., methodologies) discussed herein may perform.

### DETAILED DESCRIPTION

An autonomous mobile robot may be controlled locally or remotely to execute a mission, such as a cleaning mission involving rooms or floor surface areas to be cleaned by a mobile cleaning robot A user may use a remote control device to display a map of the environment, create a cleaning mission on a user interface (UI) of the remote control device, control the mobile robot to execute the cleaning mission, and connect the mobile robot to interact with other smart home devices, services, or ecosystems. Time-based schedules have been used in conventional mobile robots. For example, a user may program or select certain day(s) and/or time periods for a cleaning mission or certain tasks therein. The time-based scheduling may take different forms, such as in association with personal daily schedules or events, such as times to wake up, times to go to work, times to come home, etc. The time-based scheduling has several disadvantages. First, as a mission may include multiple tasks each requiring separate time schedules, manual scheduling can be tedious and time-consuming. In practice, however, some missions are highly repeatable routines. Repeated mission creation adds burden to a user, and increases the chance of introducing human errors or inconsistency between the missions. Second, the time-based schedule is generally static and lacks the capability of adapting to a change of schedule. For example, the time for "return home from work" may vary due to traffic or other exceptional events. Lacking the desired automaticity, a user may need to manually set up new time schedules or start ad-hoc robot missions to handle exceptions, which may be tedious and inconvenient especially for users with a busy lifestyle.

Conventional robot scheduling is also largely a map-based approach, in which the user defines a mission as rooms or floor surface areas on a map that need to be cleaned. The map-and-location approach can be disadvantageous as it is not customized to meet an individual user's needs or unique goals. For example, a map-and-room based cleaning mission does not accommodate a user's preferences of time, location, or a pattern of room cleaning, or the user's past experience or habit of using the mobile robot in the environment, or have knowledge of a user's real-time location inside or outside of the home. The map-and-location approach also lacks contextual content of a mission, such as spatial and/or temporal context of the mission or a task therein. For example, the user may be engaged in certain activities and does not want to be disturbed by the mobile robot moving around to execute a schedule mission (e.g., according to a time-based schedule). The map-and-location approach may disadvantageously limit the user's experience with mission scheduling and the usability of robot control. In contrast, missions schedules made reference to, and triggered by, a user's behavior or other contextual information in the home may be more desirable than the map-based schedules.

The present inventors have recognized an unmet need for devices and methods for improving mission scheduling and mobile robot control with enhanced automaticity. According to one example, a mobile cleaning robot comprises a drive system to move the mobile cleaning robot about an environment in a user's residence, and a controller circuit to receive an indication of the user entering or exiting a pre-defined geographical zone with respect to the location of the user's residence. The pre-defined geographical zone, also referred to as a geofence, defines virtual boundaries around the location of the user's residence. Location and geofencing services, which may be implemented in a mobile device (e.g., a mobile phone) in a form of mobile application, may be used to automatically determine if and when the mobile device (and thus the user) enters or exits the geofence. Based on such indication of the user entering or exiting the geofence, the controller circuit may generate a motion control signal to navigate the mobile cleaning robot to conduct a mission in the environment.

Advantages of the systems, devices, mobile applications, and methods for scheduling and controlling of a mobile robot may include, but are not limited to, those described below and elsewhere in this document. Missions scheduled based on user geographical location, user behavior, among other contextual information as discussed herein, increase device automaticity, and enables dynamic mission scheduling which more conveniently adapts to user's behavior than the static time-based scheduling. With improved automaticity, time and effort required for manual scheduling or re-scheduling may be reduced, and the robot efficiency and usability may be improved. For example, this document describes various examples of mission routines characterized by, or in reference to, user locations, user behaviors, or user experience interacting with a room or an area in the environment, such as "Clean when I am away from home", "Stop cleaning when I return home", "Do not clean when I am in a phone call", or "Do not clean the room I am in." The mobile robot can interpret such mission routine to recognize time, location, and manner of performing the tasks in a mission. Compared to map-based missions, the mission routines described herein are architected to add a user's personalized content and context, and enable more intuitive communication between the user and the robot, such that the mobile robot may execute the mission in a commonly understandable fashion between the user and the robot. Additionally, the inclusion of the user behavior and experience and contextual information in mission description enriches the content of a mission routine, adds more intelligence to robot behavior, enhances user experience of personalized control of the mobile robot, and improves the mobile robot's overall usability.

The robots and techniques described herein, or portions thereof, can be controlled by a computer program product, that includes instructions that are stored on one or more non-transitory machine-readable storage media, and that are executable on one or more processing devices to control (e.g., to coordinate) the operations described herein. The robots described herein, or portions thereof, can be implemented as all or part of an apparatus or electronic system that can include one or more processing devices and memory to store executable instructions to implement various operations.

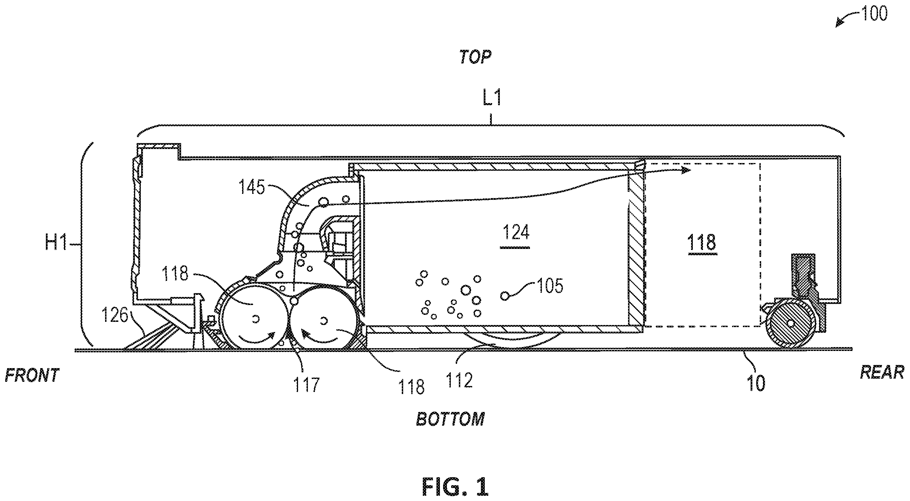

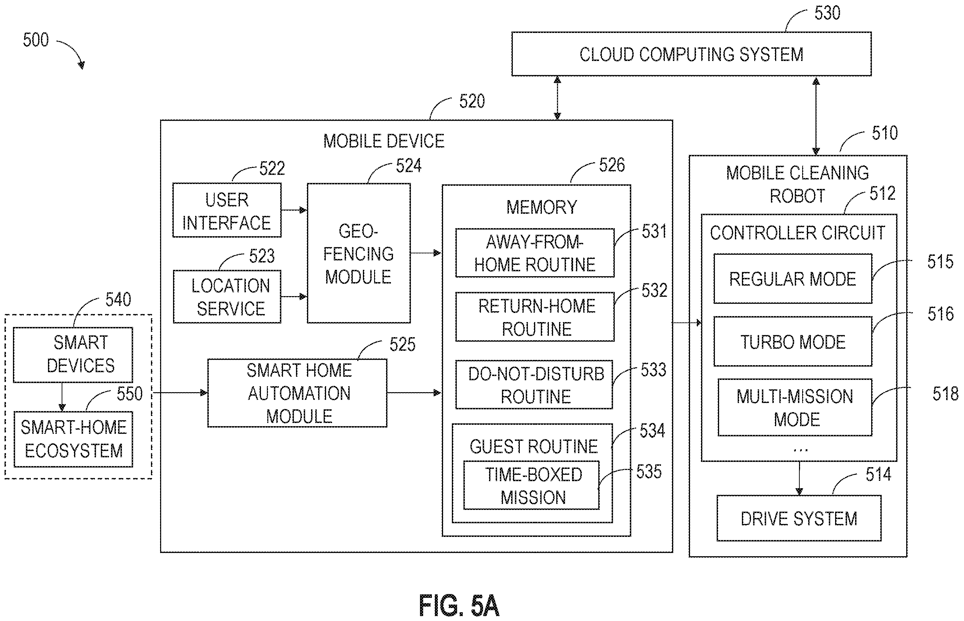

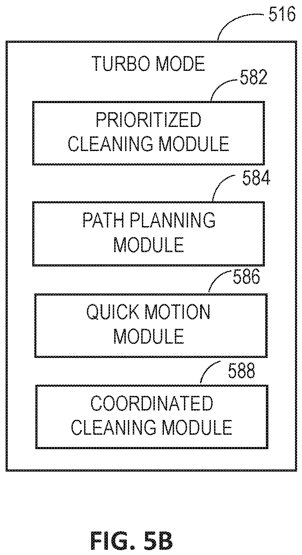

In the following, mobile robot and its working environment are briefly discussed with reference to FIGS. 1-4. Detailed descriptions of systems, devices, mobile applications, and methods of scheduling and controlling a mobile robot based on contextual information and user experience, in accordance with various embodiments described herein, are discussed with reference to FIGS. 5 to 8.

### Examples of Autonomous Mobile Robots

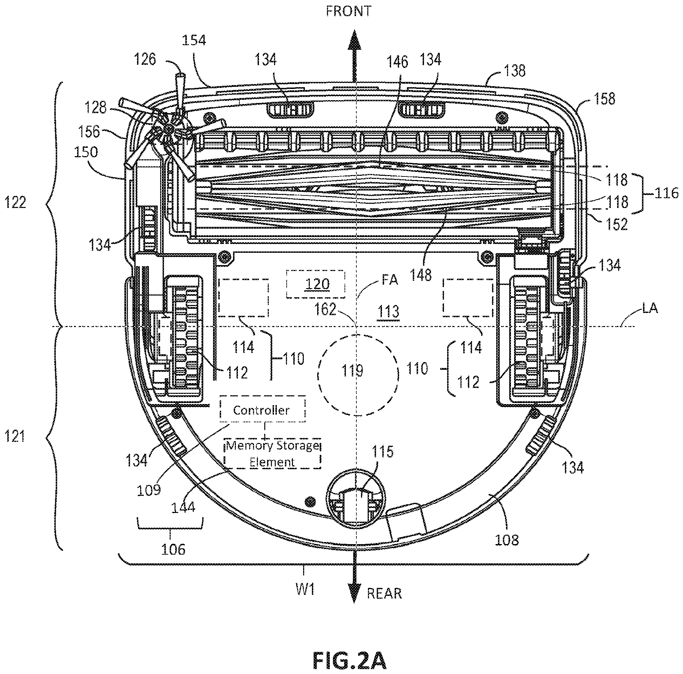

FIGS. 1 and 2A-2B depict different views of an example of a mobile robot 100. Referring to FIG. 1, the mobile robot 100 collects debris 105 from the floor surface 10 as the mobile robot 100 traverses the floor surface 10. Referring to FIG. 2A, the mobile robot 100 includes a robot housing infrastructure 108. The housing infrastructure 108 can define the structural periphery of the mobile robot 100. In some examples, the housing infrastructure 108 includes a chassis, cover, bottom plate, and bumper assembly. The mobile robot 100 is a household robot that has a small profile so that the mobile robot 100 can fit under furniture within a home. For example, a height H1 (shown in FIG. 1) of the mobile robot 100 relative to the floor surface is, for example, no more than 13 centimeters. The mobile robot 100 is also compact. An overall length L1 (shown in FIG. 1) of the mobile robot 100 and an overall width W1 (shown in FIG. 2A) are each between 30 and 60 centimeters, e.g., between 30 and 40 centimeters, 40 and 50 centimeters, or 50 and 60 centimeters. The overall width W1 can correspond to a width of the housing infrastructure 108 of the mobile robot 100.

The mobile robot 100 includes a drive system 110 including one or more drive wheels. The drive system 110 further includes one or more electric motors including electrically driven portions forming part of the electrical circuitry 106. The housing infrastructure 108 supports the electrical circuitry 106, including at least a controller circuit 109, within the mobile robot 100.

The drive system 110 is operable to propel the mobile robot 100 across the floor surface 10. The mobile robot 100 can be propelled in a forward drive direction F or a rearward drive direction R. The mobile robot 100 can also be propelled such that the mobile robot 100 turns in place or turns while moving in the forward drive direction F or the rearward drive direction R. In the example depicted in FIG. 2A, the mobile robot 100 includes drive wheels 112 extending through a bottom portion 113 of the housing infrastructure 108. The drive wheels 112 are rotated by motors 114 to cause movement of the mobile robot 100 along the floor surface 10. The mobile robot 100 further includes a passive caster wheel 115 extending through the bottom portion 113 of the housing infrastructure 108. The caster wheel 115 is not powered. Together, the drive wheels 112 and the caster wheel 115 cooperate to support the housing infrastructure 108 above the floor surface 10. For example, the caster wheel 115 is disposed along a rearward portion 121 of the housing infrastructure 108, and the drive wheels 112 are disposed forward of the caster wheel 115.

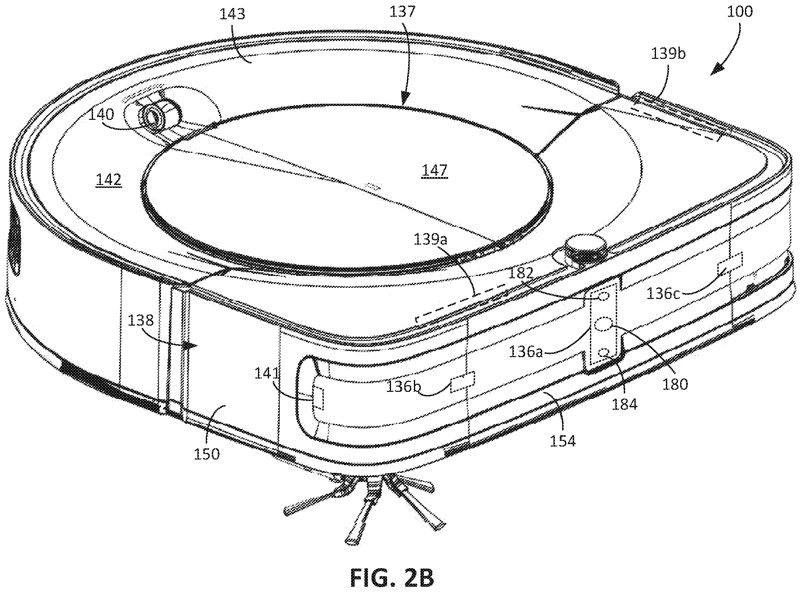

Referring to FIG. 2B, the mobile robot 100 includes a forward portion 122 that is substantially rectangular and a rearward portion 121 that is substantially semicircular. The forward portion 122 includes side surfaces 150, 152, a forward surface 154, and corner surfaces 156, 158. The corner surfaces 156, 158 of the forward portions 122 connect the side surface 150, 152 to the forward surface 154.

In the example depicted in FIGS. 1 and 2A-2B, the mobile robot 100 is an autonomous mobile floor cleaning robot that includes a cleaning head assembly 116 (shown in FIG. 2A) operable to clean the floor surface 10. For example, the mobile robot 100 is a vacuum cleaning robot in which the cleaning head assembly 116 is operable to clean the floor surface 10 by ingesting debris 105 (shown in FIG. 1) from the floor surface 10. The cleaning head assembly 116 includes a cleaning inlet 117 through which debris is collected by the mobile robot 100. The cleaning inlet 117 is positioned forward of a center of the mobile robot 100, e.g., a center 162, and along the forward portion 122 of the mobile robot 100 between the side surfaces 150, 152 of the forward portion 122.

The cleaning head assembly 116 includes one or more rotatable members, e.g., rotatable members 118 driven by a roller motor 120. The rotatable members 118 extend horizontally across the forward portion 122 of the mobile robot 100. The rotatable members 118 are positioned along a forward portion 122 of the housing infrastructure 108, and extend along 75% to 95% of a width of the forward portion 122 of the housing infrastructure 108, e.g., corresponding to an overall width W1 of the mobile robot 100. Referring also to FIG. 1, the cleaning inlet 117 is positioned between the rotatable members 118.

As shown in FIG. 1, the rotatable members 118 are rollers that counter rotate relative to one another. For example, the rotatable members 118 can include a front roller and a rear roller mounted parallel to the floor surface and spaced apart from one another by a small elongated gap. The rotatable members 118 can be rotatable about parallel horizontal axes 146, 148 (shown in FIG. 2A) to agitate debris 105 on the floor surface 10 and direct the debris 105 toward the cleaning inlet 117, into the cleaning inlet 117, and into a suction pathway 145 (shown in FIG. 1) in the mobile robot 100. Referring back to FIG. 2A, the rotatable members 118 can be positioned entirely within the forward portion 122 of the mobile robot 100. The rotatable members 118 include elastomeric shells that contact debris 105 on the floor surface 10 to direct debris 105 through the cleaning inlet 117 between the rotatable members 118 and into an interior of the mobile robot 100, e.g., into a debris bin 124 (shown in FIG. 1), as the rotatable members 118 rotate relative to the housing infrastructure 108. The rotatable members 118 further contact the floor surface 10 to agitate debris 105 on the floor surface 10. In the example as illustrated in FIG. 2A, the rotatable members 118, such as front and rear rollers, may each feature a pattern of chevron-shaped vanes distributed along its cylindrical exterior, and the vanes of at least one roller make contact with the floor surface along the length of the roller and experience a consistently applied friction force during rotation that is not present with brushes having pliable bristles.

The rotatable members 118 may take other suitable configurations. In an example, at least one of the front and rear rollers may include bristles and/or elongated pliable flaps for agitating the floor surface. In an example, a flapper brush, rotatably coupled to the cleaning head assembly housing, can include a compliant flap extending radially outward from the core to sweep a floor surface as the roller is driven to rotate. The flap is configured to prevent errant filaments from spooling tightly about the core to aid subsequent removal of the filaments. The flapper brush includes axial end guards mounted on the core adjacent the ends of the outer core surface and configured to prevent spooled filaments from traversing axially from the outer core surface onto the mounting features. The flapper brush can include multiple floor cleaning bristles extending radially outward from the core.

The mobile robot 100 further includes a vacuum system 119 operable to generate an airflow through the cleaning inlet 117 between the rotatable members 118 and into the debris bin 124. The vacuum system 119 includes an impeller and a motor to rotate the impeller to generate the airflow. The vacuum system 119 cooperates with the cleaning head assembly 116 to draw debris 105 from the floor surface 10 into the debris bin 124. In some cases, the airflow generated by the vacuum system 119 creates sufficient force to draw debris 105 on the floor surface 10 upward through the gap between the rotatable members 118 into the debris bin 124. In some cases, the rotatable members 118 contact the floor surface 10 to agitate the debris 105 on the floor surface 10, thereby allowing the debris 105 to be more easily ingested by the airflow generated by the vacuum system 119.

The mobile robot 100 further includes a brush 126 (also referred to as a side brush) that rotates about a non-horizontal axis, e.g., an axis forming an angle between 75 degrees and 90 degrees with the floor surface 10. The non-horizontal axis, for example, forms an angle between 75 degrees and 90 degrees with the longitudinal axes of the rotatable members 118. The mobile robot 100 includes a brush motor 128 operably connected to the side brush 126 to rotate the side brush 126.

The brush 126 is a side brush laterally offset from a fore-aft axis FA of the mobile robot 100 such that the brush 126 extends beyond an outer perimeter of the housing infrastructure 108 of the mobile robot 100. For example, the brush 126 can extend beyond one of the side surfaces 150, 152 of the mobile robot 100 and can thereby be capable of engaging debris on portions of the floor surface 10 that the rotatable members 118 typically cannot reach, e.g., portions of the floor surface 10 outside of a portion of the floor surface 10 directly underneath the mobile robot 100. The brush 126 is also forwardly offset from a lateral axis LA of the mobile robot 100 such that the brush 126 also extends beyond the forward surface 154 of the housing infrastructure 108. As depicted in FIG. 2A, the brush 126 extends beyond the side surface 150, the corner surface 156, and the forward surface 154 of the housing infrastructure 108. In some implementations, a horizontal distance D1 that the brush 126 extends beyond the side surface 150 is at least, for example, 0.2 centimeters, e.g., at least 0.25 centimeters, at least 0.3 centimeters, at least 0.4 centimeters, at least 0.5 centimeters, at least 1 centimeter, or more. The brush 126 is positioned to contact the floor surface 10 during its rotation so that the brush 126 can easily engage the debris 105 on the floor surface 10.

The brush 126 is rotatable about the non-horizontal axis in a manner that brushes debris on the floor surface 10 into a cleaning path of the cleaning head assembly 116 as the mobile robot 100 moves. For example, in examples in which the mobile robot 100 is moving in the forward drive direction F, the brush 126 is rotatable in a clockwise direction (when viewed from a perspective above the mobile robot 100) such that debris that the brush 126 contacts moves toward the cleaning head assembly and toward a portion of the floor surface 10 in front of the cleaning head assembly 116 in the forward drive direction F. As a result, as the mobile robot 100 moves in the forward drive direction F, the cleaning inlet 117 of the mobile robot 100 can collect the debris swept by the brush 126. In examples in which the mobile robot 100 is moving in the rearward drive direction R, the brush 126 is rotatable in a counterclockwise direction (when viewed from a perspective above the mobile robot 100) such that debris that the brush 126 contacts moves toward a portion of the floor surface 10 behind the cleaning head assembly 116 in the rearward drive direction R. As a result, as the mobile robot 100 moves in the rearward drive direction R, the cleaning inlet 117 of the mobile robot 100 can collect the debris swept by the brush 126.

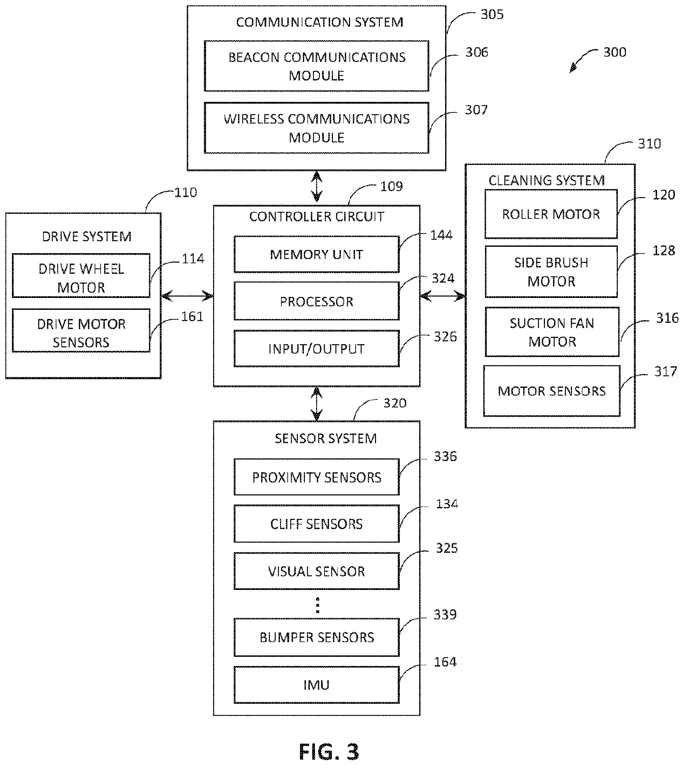

The electrical circuitry 106 includes, in addition to the controller circuit 109, a memory storage element 144 and a sensor system with one or more electrical sensors, for example, The sensor system, as described herein, can generate a signal indicative of a current location of the mobile robot 100, and can generate signals indicative of locations of the mobile robot 100 as the mobile robot 100 travels along the floor surface 10. The controller circuit 109 is configured to execute instructions to perform one or more operations as described herein. The memory storage element 144 is accessible by the controller circuit 109 and disposed within the housing infrastructure 108. The one or more electrical sensors are configured to detect features in an environment of the mobile robot 100. For example, referring to FIG. 2A, the sensor system includes cliff sensors 134 disposed along the bottom portion 113 of the housing infrastructure 108. Each of the cliff sensors 134 is an optical sensor that can detect the presence or the absence of an object below the optical sensor, such as the floor surface 10. The cliff sensors 134 can thus detect obstacles such as drop-offs and cliffs below portions of the mobile robot 100 where the cliff sensors 134 are disposed and redirect the robot accordingly. More details of the sensor system and the controller circuit 109 are discussed below, such as with reference to FIG. 3.

Referring to FIG. 2B, the sensor system includes one or more proximity sensors that can detect objects along the floor surface 10 that are near the mobile robot 100. For example, the sensor system can include proximity sensors 136a, 136b, 136c disposed proximate the forward surface 154 of the housing infrastructure 108. Each of the proximity sensors 136a, 136b, 136c includes an optical sensor facing outward from the forward surface 154 of the housing infrastructure 108 and that can detect the presence or the absence of an object in front of the optical sensor. For example, the detectable objects include obstacles such as furniture, walls, persons, and other objects in the environment of the mobile robot 100.

The sensor system includes a bumper system including the bumper 138 and one or more bump sensors that detect contact between the bumper 138 and obstacles in the environment. The bumper 138 forms part of the housing infrastructure 108. For example, the bumper 138 can form the side surfaces 150, 152 as well as the forward surface 154. The sensor system, for example, can include the bump sensors 139a, 139b. The bump sensors 139a, 139b can include break beam sensors, capacitive sensors, or other sensors that can detect contact between the mobile robot 100, e.g., the bumper 138, and objects in the environment. In some implementations, the bump sensor 139a can be used to detect movement of the bumper 138 along the fore-aft axis FA (shown in FIG. 2A) of the mobile robot 100, and the bump sensor 139b can be used to detect movement of the bumper 138 along the lateral axis LA (shown in FIG. 2A) of the mobile robot 100. The proximity sensors 136a, 136b, 136c can detect objects before the mobile robot 100 contacts the objects, and the bump sensors 139a, 139b can detect objects that contact the bumper 138, e.g., in response to the mobile robot 100 contacting the objects.

The sensor system includes one or more obstacle following sensors. For example, the mobile robot 100 can include an obstacle following sensor 141 along the side surface 150. The obstacle following sensor 141 includes an optical sensor facing outward from the side surface 150 of the housing infrastructure 108 and that can detect the presence or the absence of an object adjacent to the side surface 150 of the housing infrastructure 108. The obstacle following sensor 141 can emit an optical beam horizontally in a direction perpendicular to the forward drive direction F of the mobile robot 100 and perpendicular to the side surface 150 of the mobile robot 100. For example, the detectable objects include obstacles such as furniture, walls, persons, and other objects in the environment of the mobile robot 100. In some implementations, the sensor system can include an obstacle following sensor along the side surface 152, and the obstacle following sensor can detect the presence or the absence an object adjacent to the side surface 152. The obstacle following sensor 141 along the side surface 150 is a right obstacle following sensor, and the obstacle following sensor along the side surface 152 is a left obstacle following sensor. The one or more obstacle following sensors, including the obstacle following sensor 141, can also serve as obstacle detection sensors, e.g., similar to the proximity sensors described herein. In this regard, the left obstacle following can be used to determine a distance between an object, e.g., an obstacle surface, to the left of the mobile robot 100 and the mobile robot 100, and the right obstacle following sensor can be used to determine a distance between an object, e.g., an obstacle surface, to the right of the mobile robot 100 and the mobile robot 100.

In some implementations, at least some of the proximity sensors 136a, 136b, 136c, and the obstacle following sensor 141 each includes an optical emitter and an optical detector. The optical emitter emits an optical beam outward from the mobile robot 100, e.g., outward in a horizontal direction, and the optical detector detects a reflection of the optical beam that reflects off an object near the mobile robot 100. The mobile robot 100, e.g., using the controller circuit 109, can determine a time of flight of the optical beam and thereby determine a distance between the optical detector and the object, and hence a distance between the mobile robot 100 and the object.

In some implementations, the proximity sensor 136a includes an optical detector 180 and multiple optical emitters 182, 184. One of the optical emitters 182, 184 can be positioned to direct an optical beam outwardly and downwardly, and the other of the optical emitters 182, 184 can be positioned to direct an optical beam outwardly and upwardly. The optical detector 180 can detect reflections of the optical beams or scatter from the optical beams. In some implementations, the optical detector 180 is an imaging sensor, a camera, or some other type of detection device for sensing optical signals. In some implementations, the optical beams illuminate horizontal lines along a planar vertical surface forward of the mobile robot 100. In some implementations, the optical emitters 182, 184 each emit a fan of beams outward toward an obstacle surface such that a one-dimensional grid of dots appear on one or more obstacle surfaces. The one-dimensional grid of dots can be positioned on a horizontally extending line. In some implementations, the grid of dots can extend across multiple obstacle surfaces, e.g., multiple obstacle surfaces adjacent to one another. The optical detector 180 can capture an image representative of the grid of dots formed by the optical emitter 182 and the grid of dots formed by the optical emitter 184. Based on a size of a dot in the image, the mobile robot 100 can determine a distance of an object on which the dot appears relative to the optical detector 180, e.g., relative to the mobile robot 100. The mobile robot 100 can make this determination for each of the dots, thus allowing the mobile robot 100 to determine a shape of an object on which the dots appear. In addition, if multiple objects are ahead of the mobile robot 100, the mobile robot 100 can determine a shape of each of the objects. In some implementations, the objects can include one or more objects that are laterally offset from a portion of the floor surface 10 directly in front of the mobile robot 100.

The sensor system further includes an image capture device 140, e.g., a camera, directed toward a top portion 142 of the housing infrastructure 108. The image capture device 140 generates digital imagery of the environment of the mobile robot 100 as the mobile robot 100 moves about the floor surface 10. The image capture device 140 is angled in an upward direction, e.g., angled between 30 degrees and 80 degrees from the floor surface 10 about which the mobile robot 100 navigates. The camera, when angled upward, is able to capture images of wall surfaces of the environment so that features corresponding to objects on the wall surfaces can be used for localization.

When the controller circuit 109 causes the mobile robot 100 to perform the mission, the controller circuit 109 operates the motors 114 to drive the drive wheels 112 and propel the mobile robot 100 along the floor surface 10. In addition, the controller circuit 109 operates the roller motor 120 to cause the rotatable members 118 to rotate, operates the brush motor 128 to cause the side brush 126 to rotate, and operates the motor of the vacuum system 119 to generate the airflow. To cause the mobile robot 100 to perform various navigational and cleaning behaviors, the controller circuit 109 executes software stored on the memory storage element 144 to cause the mobile robot 100 to perform by operating the various motors of the mobile robot 100. The controller circuit 109 operates the various motors of the mobile robot 100 to cause the mobile robot 100 to perform the behaviors.

The sensor system can further include sensors for tracking a distance travelled by the mobile robot 100. For example, the sensor system can include encoders associated with the motors 114 for the drive wheels 112, and these encoders can track a distance that the mobile robot 100 has travelled. In some implementations, the sensor system includes an optical sensor facing downward toward a floor surface. The optical sensor can be an optical mouse sensor. For example, the optical sensor can be positioned to direct light through a bottom surface of the mobile robot 100 toward the floor surface 10. The optical sensor can detect reflections of the light and can detect a distance travelled by the mobile robot 100 based on changes in floor features as the mobile robot 100 travels along the floor surface 10.

The controller circuit 109 uses data collected by the sensors of the sensor system to control navigational behaviors of the mobile robot 100 during the mission. For example, the controller circuit 109 uses the sensor data collected by obstacle detection sensors of the mobile robot 100, e.g., the cliff sensors 134, the proximity sensors 136a, 136b, 136c, and the bump sensors 139a, 139b, to enable the mobile robot 100 to avoid obstacles or to prevent from falling down stairs within the environment of the mobile robot 100 during the mission. In some examples, the controller circuit 109 controls the navigational behavior of the mobile robot 100 using information about the environment, such as a map of the environment. With proper navigation, the mobile robot 100 is able to reach a goal position or completes a coverage mission as efficiently and as reliably as possible.

The sensor data can be used by the controller circuit 109 for simultaneous localization and mapping (SLAM) techniques in which the controller circuit 109 extracts features of the environment represented by the sensor data and constructs a map of the floor surface 10 of the environment. The sensor data collected by the image capture device 140 can be used for techniques such as vision-based SLAM (VSLAM) in which the controller circuit 109 extracts visual features corresponding to objects in the environment and constructs the map using these visual features. As the controller circuit 109 directs the mobile robot 100 about the floor surface 10 during the mission, the controller circuit 109 uses SLAM techniques to determine a location of the mobile robot 100 within the map by detecting features represented in collected sensor data and comparing the features to previously stored features. The map formed from the sensor data can indicate locations of traversable and nontraversable space within the environment. For example, locations of obstacles are indicated on the map as nontraversable space, and locations of open floor space are indicated on the map as traversable space.

The sensor data collected by any of the sensors can be stored in the memory storage element 144. In addition, other data generated for the SLAM techniques, including mapping data forming the map, can be stored in the memory storage element 144. These data produced during the mission can include persistent data that are produced during the mission and that are usable during a further mission. For example, the mission can be a first mission, and the further mission can be a second mission occurring after the first mission. In addition to storing the software for causing the mobile robot 100 to perform its behaviors, the memory storage element 144 stores sensor data or data resulting from processing of the sensor data for access by the controller circuit 109 from one mission to another mission. For example, the map can be a persistent map that is usable and updateable by the controller circuit 109 of the mobile robot 100 from one mission to another mission to navigate the mobile robot 100 about the floor surface 10. According to various embodiments discussed in this document, the persistent map can be updated in response to instruction commands received from a user. The controller circuit 109 can modify subsequent or future navigational behaviors of the mobile robot 100 according to the updated persistent map, such as by modifying the planned path or updating obstacle avoidance strategy.

The persistent data, including the persistent map, enables the mobile robot 100 to efficiently clean the floor surface 10. For example, the persistent map enables the controller circuit 109 to direct the mobile robot 100 toward open floor space and to avoid nontraversable space. In addition, for subsequent missions, the controller circuit 109 is able to plan navigation of the mobile robot 100 through the environment using the persistent map to optimize paths taken during the missions.

The mobile robot 100 can, in some implementations, include a light indicator system 137 located on the top portion 142 of the mobile robot 100. The light indicator system 137 can include light sources positioned within a lid 147 covering the debris bin 124 (shown in FIG. 2A). The light sources can be positioned to direct light to a periphery of the lid 147. The light sources are positioned such that any portion of a continuous loop 143 on the top portion 142 of the mobile robot 100 can be illuminated. The continuous loop 143 is located on a recessed portion of the top portion 142 of the mobile robot 100 such that the light sources can illuminate a surface of the mobile robot 100 as they are activated.

FIG. 3 is a diagram illustrating an example of a control architecture 300 for operating a mobile cleaning robot. The controller circuit 109 can be communicatively coupled to various subsystems of the mobile robot 100, including a communications system 305, a cleaning system 310, a drive system 110, and a sensor system 320. The controller circuit 109 includes a memory storage element 144 that holds data and instructions for processing by a processor 324. The processor 324 receives program instructions and feedback data from the memory storage element 144, executes logical operations called for by the program instructions, and generates command signals for operating the respective subsystem components of the mobile robot 100. An input/output unit 326 transmits the command signals and receives feedback from the various illustrated components.

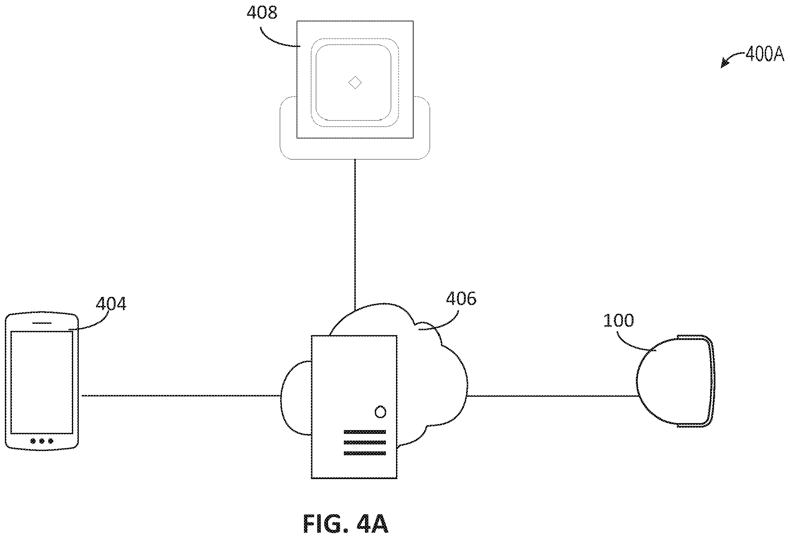

The communications system 305 can include a beacon communications module 306 and a wireless communications module 307. The beacon communications module 306 may be communicatively coupled to the controller circuit 109. In some embodiments, the beacon communications module 306 is operable to send and receive signals to and from a remote device. For example, the beacon communications module 306 may detect a navigation signal projected from an emitter of a navigation or virtual wall beacon or a homing signal projected from the emitter of a docking station. Docking, confinement, home base, and homing technologies are discussed in U.S. Pat. Nos. 7,196,487 and 7,404,000, U.S. Patent Application Publication No. 20050156562, and U.S. Patent Application Publication No. 20140100693 (the entireties of which are hereby incorporated by reference). As described in U.S. Patent Publication 2014/0207282 (the entirety of which is hereby incorporated by reference), the wireless communications module 307 facilitates the communication of information describing a status of the mobile robot 100 over a suitable wireless network (e.g., a wireless local area network) with one or more mobile devices (e.g., mobile device 404 shown in FIG. 4A). More details of the communications system 305 are discussed below, such as with reference to FIG. 4A.

The cleaning system 310 can include the roller motor 120, a brush motor 128 driving the side brush 126, and a suction fan motor 316 powering the vacuum system 119. The cleaning system 310 further includes multiple motor sensors 317 that monitor operation of the roller motor 120, the brush motor 128, and the suction fan motor 316 to facilitate closed-loop control of the motors by the controller circuit 109. In some embodiments, the roller motor 120 is operated by the controller circuit 109 (or a suitable microcontroller) to drive the rollers (e.g., rotatable members 118) according to a particular speed setting via a closed-loop pulse-width modulation (PWM) technique, where the feedback signal is received from a motor sensor 317 monitoring a signal indicative of the rotational speed of the roller motor 120. For example, such a motor sensor 317 may be provided in the form of a motor current sensor (e.g., a shunt resistor, a current-sensing transformer, and/or a Hall Effect current sensor).

The drive system 110 can include a drive-wheel motor 114 for operating the drive wheels 112 in response to drive commands or control signals from the controller circuit 109, as well as multiple drive motor sensors 161 to facilitate closed-loop control of the drive wheels (e.g., via a suitable PWM technique as described above). In some implementations, a microcontroller assigned to the drive system 110 is configured to decipher drive commands having x, y, and θ components. The controller circuit 109 may issue individual control signals to the drive-wheel motor 114. In any event, the controller circuit 109 can maneuver the mobile robot 100 in any direction across a cleaning surface by independently controlling the rotational speed and direction of each drive wheel 112 via the drive-wheel motor 114.

The controller circuit 109 can operate the drive system 110 in response to signals received from the sensor system 320. For example, the controller circuit 109 may operate the drive system 110 to redirect the mobile robot 100 to avoid obstacles and clutter encountered while treating a floor surface. In another example, if the mobile robot 100 becomes stuck or entangled during use, the controller circuit 109 may operate the drive system 110 according to one or more escape behaviors. To achieve reliable autonomous movement, the sensor system 320 may include several different types of sensors that can be used in combination with one another to allows the mobile robot 100 to make intelligent decisions about a particular environment. By way of example and not limitation, the sensor system 320 can include one or more of proximity sensors 336 (such as the proximity sensors 136a-136c), the cliff sensors 134, a visual sensor 325 such as the image capture device 140 configured for detecting features and landmarks in the operating environment and building a virtual map, such as using VSLAM technology, as described above.

The sensor system 320 may further include bumper sensors 339 (such as the bumper sensors139a and 139b), responsive to activation of the bumper 138. The sensor system 320 can include an inertial measurement unit (IMU) 164 that is, in part, responsive to changes in position of the mobile robot 100 with respect to a vertical axis substantially perpendicular to the floor and senses when the mobile robot 100 is pitched at a floor type interface having a difference in height, which is potentially attributable to a flooring type change. In some examples, the IMU 164 is a six-axis IMU having a gyro sensor that measures the angular velocity of the mobile robot 100 relative to the vertical axis. However, other suitable configurations are also contemplated. For example, the IMU 164 may include an accelerometer sensitive to the linear acceleration of the mobile robot 100 along the vertical axis. In any event, output from the IMU 164 is received by the controller circuit 109 and processed to detect a discontinuity in the floor surface across which the mobile robot 100 is traveling. Within the context of the present disclosure the terms "flooring discontinuity" and "threshold" refer to any irregularity in the floor surface (e.g., a change in flooring type or change in elevation at a flooring interface) that is traversable by the mobile robot 100, but that causes a discrete vertical movement event (e.g., an upward or downward "bump"). The vertical movement event could refer to a part of the drive system (e.g., one of the drive wheels 112) or the chassis of the robot housing 108, depending on the configuration and placement of the IMU 164. Detection of a flooring threshold, or flooring interface, may prompt the controller circuit 109 to expect a change in floor type. For example, the mobile robot 100 may experience a significant downward vertical bump as it moves from high pile carpet (a soft floor surface) to a tile floor (a hard floor surface), and an upward bump in the opposite case.

A wide variety of other types of sensors, though not shown or described in connection with the illustrated examples, may be incorporated in the sensor system 320 (or any other subsystem) without departing from the scope of the present disclosure. Such sensors may function as obstacle detection units, obstacle detection obstacle avoidance (ODOA) sensors, wheel drop sensors, obstacle-following sensors, stall-sensor units, drive-wheel encoder units, bumper sensors, and the like.

### Examples of Communication Networks

FIG. 4A is a diagram illustrating by way of example and not limitation a communication network 400A that enables networking between the mobile robot 100 and one or more other devices, such as a mobile device 404, a cloud computing system 406, or another autonomous robot 408 separate from the mobile device 404. Using the communication network 400A, the mobile robot 100, the mobile device 404, the robot 408, and the cloud computing system 406 can communicate with one another to transmit data to one another and receive data from one another. In some implementations, the mobile robot 100, the robot 408, or both the mobile robot 100 and the robot 408 communicate with the mobile device 404 through the cloud computing system 406. Alternatively or additionally, the mobile robot 100, the robot 408, or both the mobile robot 100 and the robot 408 communicate directly with the mobile device 404. Various types and combinations of wireless networks (e.g., Bluetooth, radio frequency, optical based, etc.) and network architectures (e.g., mesh networks) may be employed by the communication network 400A.

In some implementations, the mobile device 404 as shown in FIG. 4A is a remote device that can be linked to the cloud computing system 406, and can enable a user to provide inputs on the mobile device 404. The mobile device 404 can include user input elements such as, for example, one or more of a touchscreen display, buttons, a microphone, a mouse, a keyboard, or other devices that respond to inputs provided by the user. The mobile device 404 alternatively or additionally includes immersive media (e.g., virtual reality) with which the user interacts to provide a user input. The mobile device 404, in these cases, is, for example, a virtual reality headset or a head-mounted display. The user can provide inputs corresponding to commands for the mobile device 404. In such cases, the mobile device 404 transmits a signal to the cloud computing system 406 to cause the cloud computing system 406 to transmit a command signal to the mobile robot 100. In some implementations, the mobile device 404 can present augmented reality images. In some implementations, the mobile device 404 is a smart phone, a laptop computer, a tablet computing device, or other mobile device.

According to various embodiments discussed herein, the mobile device 404 may include a user interface configured to display a map of the robot environment. Robot path, such as that identified by the coverage planner of the controller circuit 109, may also be displayed on the map. The interface may receive a user instruction to modify the environment map, such as by adding, removing, or otherwise modifying a keep-out traversable zone in the environment; adding, removing, or otherwise modifying a duplicate traversal zone in the environment (such as an area that requires repeated cleaning); restricting a robot traversal direction or traversal pattern in a portion of the environment; or adding or changing a cleaning rank, among others.

In some implementations, the communication network 400A can include additional nodes. For example, nodes of the communication network 400A can include additional robots. Alternatively or additionally, nodes of the communication network 400A can include network-connected devices. In some implementations, a network-connected device can generate information about the environment. The network-connected device can include one or more sensors to detect features in the environment, such as an acoustic sensor, an image capture system, or other sensor generating signals from which features can be extracted. Network-connected devices can include home cameras, smart sensors, smart locks, smart thermostats, smart garage door openers, and the like.

In the communication network 400A depicted in FIG. 4A and in other implementations of the communication network 400A, the wireless links may utilize various communication schemes, protocols, etc., such as, for example, Bluetooth classes, Wi-Fi, Bluetooth-low-energy, also known as BLE, 802.15.4, Worldwide Interoperability for Microwave Access (WiMAX), an infrared channel or satellite band. In some cases, the wireless links include any cellular network standards used to communicate among mobile devices, including, but not limited to, standards that qualify as 1G, 2G, 3G, or 4G. The network standards, if utilized, qualify as, for example, one or more generations of mobile telecommunication standards by fulfilling a specification or standards such as the specifications maintained by International Telecommunication Union. The 3G standards, if utilized, correspond to, for example, the International Mobile Telecommunications-2000 (IMT-2000) specification, and the 4G standards may correspond to the International Mobile Telecommunications Advanced (IMT-Advanced) specification. Examples of cellular network standards include AMPS, GSM, GPRS, UMTS, LTE, LTE Advanced, Mobile WiMAX, and WiMAX-Advanced. Cellular network standards may use various channel access methods, e.g., FDMA, TDMA, CDMA, or SDMA.

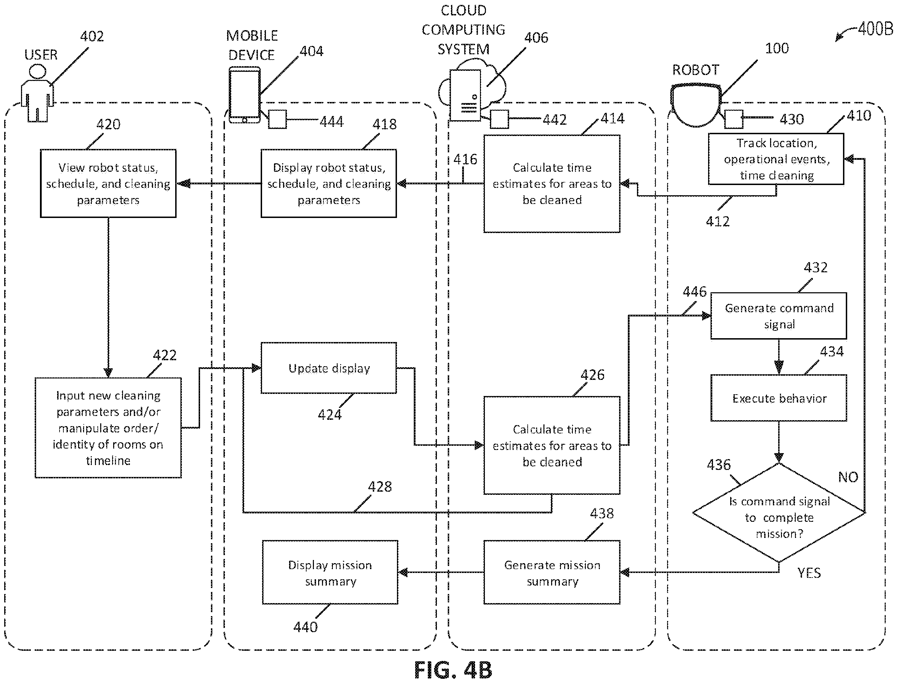

FIG. 4B is a diagram illustrating an exemplary process 400B of exchanging information among devices in the communication network 400A, including the mobile robot 100, the cloud computing system 406, and the mobile device 404. A cleaning mission may be initiated by pressing a button on the mobile robot 100 or may be scheduled for a future time or day. The user may select a set of rooms to be cleaned during the cleaning mission, select a set of areas or zones within a room, or may instruct the robot to clean all rooms. The user may also select a set of cleaning parameters to be used in each room during the cleaning mission.

During a cleaning mission, the mobile robot 100 tracks 410 its status, including its location, any operational events occurring during cleaning, and a time spent cleaning. The mobile robot 100 transmits 412 status data (e.g. one or more of location data, operational event data, time data) to a cloud computing system 406, which calculates 414, by a processor 442, time estimates for areas to be cleaned. For example, a time estimate could be calculated for a cleaning room by averaging the actual cleaning times for the room that have been gathered during multiple (e.g. two or more) prior cleaning missions for the room. The cloud computing system 406 transmits 416 time estimate data along with robot status data to a mobile device 404. The mobile device 404 presents 418, by a processor 444, the robot status data and time estimate data on a display. The robot status data and time estimate data may be presented on the display of the mobile device as any of a number of graphical representations editable mission timeline and/or a mapping interface. In some examples, the mobile robot 100 can communicate directly with the mobile device 404.

A user 402 views 420 the robot status data and time estimate data on the display and may input 422 new cleaning parameters or may manipulate the order or identity of rooms to be cleaned. The user 402, may, for example, delete rooms from a cleaning schedule of the mobile robot 100. In other instances, the user 402, may, for example, select an edge cleaning mode or a deep clean mode for a room to be cleaned. The display of the mobile device 404 is updates 424 as the user inputs changes to the cleaning parameters or cleaning schedule. For example, if the user changes the cleaning parameters from single pass cleaning to dual pass cleaning, the system will update the estimated time to provide an estimate based on the new parameters. In this example of single pass cleaning vs. dual pass cleaning, the estimate would be approximately doubled. In another example, if the user removes a room from the cleaning schedule, the total time estimate is decreased by approximately the time needed to clean the removed room. Based on the inputs from the user 402, the cloud computing system 406 calculates 426 time estimates for areas to be cleaned, which are then transmitted 428 (e.g. by a wireless transmission, by applying a protocol, by broadcasting a wireless transmission) back to the mobile device 404 and displayed. Additionally, data relating to the calculated 426 time estimates are transmitted 446 to a controller 430 of the robot. Based on the inputs from the user 402, which are received by the controller 430 of the mobile robot 100, the controller 430 generates 432 a command signal. The command signal commands the mobile robot 100 to execute 434 a behavior, which may be a cleaning behavior. As the cleaning behavior is executed, the controller continues to track 410 the robot's status, including its location, any operational events occurring during cleaning, and a time spent cleaning. In some instances, live updates relating to the robot's status may be additionally provided via push notifications to a mobile device or home electronic system (e.g. an interactive speaker system).

Upon executing 434 a behavior, the controller 430 checks 436 to see if the received command signal includes a command to complete the cleaning mission. If the command signal includes a command to complete the cleaning mission, the robot is commanded to return to its dock and upon return sends information to enable the cloud computing system 406 to generate 438 a mission summary which is transmitted to, and displayed 440 by, the mobile device 404. The mission summary may include a timeline and/or a map. The timeline may display, the rooms cleaned, a time spent cleaning each room, operational events tracked in each room, etc. The map may display the rooms cleaned, operational events tracked in each room, a type of cleaning (e.g. sweeping or mopping) performed in each room, etc.

Operations for the process 400B and other processes described herein can be executed in a distributed manner. For example, the cloud computing system 406, the mobile robot 100, and the mobile device 404 may execute one or more of the operations in concert with one another. Operations described as executed by one of the cloud computing system 406, the mobile robot 100, and the mobile device 404 are, in some implementations, executed at least in part by two or all of the cloud computing system 406, the mobile robot 100, and the mobile device 404.

### Examples of Robot Scheduling and Controlling System

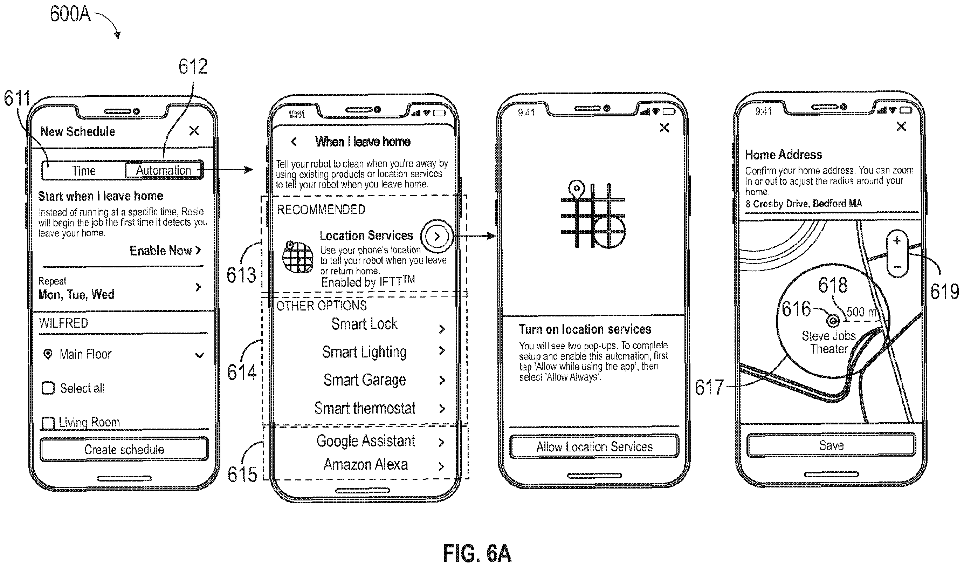

Various embodiments of systems, devices, and processes of scheduling and controlling a mobile robot based on user location, behavior, and experience are discussed in the following with reference to FIGS. 5A-5B and 6A-6G. While this document makes reference to the mobile robot 100 that performs floor cleaning, the robot scheduling and controlling system and methods discussed herein can be used in robots designed for different applications, such as mopping, mowing, transporting, surveillance, among others. Additionally, while some components, modules, and operations may be described as being implemented in and performed by the mobile robot 100, by a user, by a computing device, or by another actor, these operations may, in some implementations, be performed by actors other than those described. For example, an operation performed by the mobile robot 100 can be, in some implementations, performed by the cloud computing system 406 or by another computing device (or devices). In other examples, an operation performed by the user can be performed by a computing device. In some implementations, the cloud computing system 406 does not perform any operations. Rather, other computing devices perform the operations described as being performed by the cloud computing system 406, and these computing devices can be in direct (or indirect) communication with one another and the mobile robot 100. In some implementations, the mobile robot 100 can perform, in addition to the operations described as being performed by the mobile robot 100, the operations described as being performed by the cloud computing system 406 or the mobile device 404. Other variations are possible. Furthermore, while the methods and processes described herein are described as including certain operations or sub-operations, in other implementations, one or more of these operation or sub-operations may be omitted, or additional operations or sub-operations may be added.

FIG. 5A is a diagram illustrating an example of a mobile robot system 500 for automatic mission scheduling and robot control based on user location, user behavior, or contextual information. The mobile robot system 500 comprises a mobile cleaning robot 510, and a mobile device 520 operatively in communication with the mobile cleaning robot 510. In some examples, the mobile cleaning robot 510 may communicate with the mobile device 520 through a cloud computing system 530, an embodiment of the cloud computing system 406 as discussed above with reference to FIGS. 4A-4B.

The mobile cleaning robot 510, an embodiment of the mobile robot 100, may include, among other things, a controller circuit 512 and a drive system 514. The controller circuit 512 may receive information about user location, user behavior, or contextual information such as a temporal context. Based on the received user location, behavior, or the contextual information, the controller circuit 512 may generate a mission control signal to navigate the mobile cleaning robot 510 to conduct a mission in the environment. The mission, as to be discussed below, may be scheduled in reference to user location, behavior, or the contextual information. Such a mission scheduling process is referred to scheduling by automation, to distinguish from time-based scheduling where the mission or the tasks therein are scheduled to happen at respective times.

The mobile device 520, an embodiment of the mobile device 404, may be configured to schedule one or more missions, and to command the mobile cleaning robot 510 to execute such missions according to the respective schedules. Examples of the mobile device 520 may include a smart phone, a personal digital assistant, a laptop computer, a tablet, a smart watch, or other portable computing device. In some examples, the mobile device 520 may schedule missions for, and control the operations of, two or more mobile robots of the same or different types, such as mobile cleaning robots, mobile mopping robots, lawn mowing robots, space-monitoring robots, among others, using the techniques as described herein in accordance with various embodiments.

The mobile device 520 may include a user interface 522 that allows a user to create or modify one or more mission routines such as, by way of example and not limitation, an Away-From-Home Routine 531, a Return-Home Routine 532, a Do-Not-Disturb Routine 533, or a Guest Routine 534, as illustrated in FIG. 5A. A routine is a cleaning mission comprising one or more tasks to perform, or to refrain from performing, by the mobile robot. A routine may additionally include information about locations to clean (e.g., one or more rooms or specific zones), manners of cleaning (e.g., cleaning modes), and schedules for performing the mission (e.g., time schedules, or events and conditions that trigger the execution of the mission), among others. The mission routines may be stored in a memory 526 of the mobile device 520. Alternatively, the mission routines may be stored in the cloud computing system 530 accessible by the mobile device 520.

The mobile device 520 may run a software application implemented therein (e.g., a mobile application) or a web-based service (e.g., services provided by the cloud computing system 530) to assist the user in creating or modifying the mission routines. In an example, such a software application or web-based service may use "If This Then That" (IFTTT) technology that connects different applications, devices, or services in order to trigger one or more automations involving those applications, devices and services. A user may create, via the user interface 522, one or more mission routines using the IFTTT service. A mission routine thus created may include a set of conditional cleaning tasks that may be triggered by certain events or user behaviors, which can be detected or otherwise received by the mobile device 520. For example, the Away-From-Home Routine 531 may include a mission triggered by an indication that the user leaves home (e.g., "Clean the living room and kitchen when I am away."). The Return-Home Routine 532 may include a mission triggered by an indication that the user arrives, or is about to arrive, at home (e.g., "Stop cleaning and return to dock when I am returning home."). The Away-From-Home Routine 531 and the Return-Home Routine 532 are referred to as home-centric routines in this document. The Do-Not-Disturb Routine 533 may include a mission or specific robot actions that the mobile cleaning robot 510 refrains from performing, or temporary suspension, pause, or postponement of an unfinished cleaning mission. In an example, a user may schedule a Do-Not-Disturb Routine by specifying a "No-Run Time". Alternatively, the Do-Not-Disturb Routine can be conditional upon a specific user behavior (e.g., "Do not clean when I am in a phone call", or "Stop cleaning when I turn on my smart TV", or "Do not mow when my dog is in the yard."). The Guest Routine may include a mission to be performed during a pre-set time period which, in an example, can be shorter than that generally needed to complete the entire mission when the mobile robot operates in its typical cleaning mode. In some examples, the Guest Routine may include a time-boxed mission including one or more areas to be cleaned during the pre-set time window, which may be programmable or selectable by a user via a user interface of the mobile device. The IFTTT service allows different mobile applications and different devices to be connected together, and enables conditional mission operation on the mobile robot.

### Home-Centric Mission Scheduling based on Geofencing

Home-centric routines, such as the Away-From-Home Routine 531 and the Return-Home Routine 532, are based on a reliable detection or validation of the user being away from home or returning home. This may be detected or determined using one of several techniques, as discussed herein in accordance with various embodiments. In an example, the mobile device 520 may include a location service 523 and a geofencing module 524 that can detect when the user is away from home or returns home. The user interface 522 may include an display unit with input tools (e.g., UI controls) to allow a user to define a geographical zone with respect to the user's residence location, to display a map showing the defined geographical location of the user's residence, and. Such a geographic zone, also referred to as a geofence, defines virtual boundaries around the user's residence location. The location service 523 may utilize GPS, RFID, Wi-Fi or cellular data to determine a present location of the mobile device 520. As the mobile device 520 is generally held by or otherwise associated with the user, the user's location can be inferred to be substantially the same as the location of the mobile device 520. The geofencing module 524, which can be a software implemented in and executable by the mobile device 520 (e.g., a mobile application), can detect an indication of the user entering or exiting the geofence based on the present geographical location of the mobile device 520. In the case of multiple users in a household, the settings may be configured to detect when the last person's phone leaves the defined geographical location of the residence.

The controller circuit 512 of the mobile cleaning robot 510 may receive the indication of the user entering or exiting the geofence around the user's residence location from the mobile device 520, such as via a direct communication link or through the cloud computing system 530. The controller circuit 512 may generate a mission control signal to the drive system 514 to move the mobile cleaning robot 510 to the environment of the user's residence, and conduct a mission in accordance with a mission routine. For example, an indication of the mobile device 520 exiting the geofence (indicating the user is away from home) may automatically trigger the mobile cleaning robot 510 to execute the Away-From-Home Routine 531. An indication of the mobile device 520 entering the geofence (indicating the user is returning home) may automatically trigger the mobile cleaning robot 510 to execute the Return-Home Routine 532, such as aborting, suspending, pausing, postponing, or rescheduling the unfinished mission when or before the user arrives at home. In an example, an indication of the user entering the geofence may automatically trigger the mobile cleaning robot 510 to return to a designated dock station. In another example, an indication of the user entering the geofence may automatically trigger the mobile cleaning robot 510 to continue cleaning and finish the present mission. In some example, in response to the indication of the user entering the geofence, the mobile robot may continue the presently unfinished mission for a specific time based on an estimated time of completing the mission or a portion thereof. For example, if the mobile robot is in the middle of cleaning a room as a part of the scheduled mission when the user enters the geofence, the mobile robot may estimate the time to complete the present room and the time to complete the entire mission. If the estimated time of completion is within a specific range or less than a specific threshold time (e.g., 5 minutes), the mobile robot may continue to clean and finish the present task (e.g., the room left unfinished) or the entire mission within the estimated time. In yet another example, in response to an indication of the user entering the pre-defined geographical zone, a notification may be generated to the user (e.g., displayed on the user interface 522), and prompt the user for a command with regard to an unfinished mission. The user may choose to continue cleaning, cancel the remaining job of the mission, and send the mobile robot home to its dock station, or postpone the presently unfinished mission to a subsequently scheduled time, including the next time the user leaves the defined geofence around the residence.

### Home-Centric Mission Scheduling based on Home Automation Devices and System

In addition to or in lieu of determining the user being away from home or returning home based on the location and geofencing services, in some examples, one or more mission routines (e.g., Away-from-Home Routine 531 or the Return-Home Routine 532) may be triggered by internet-connected devices associated with the user's residence. The internet-connected devices, also referred to as smart devices, smart home devices, or Internet-of-Things (IoT) devices, are devices (or hardware in general) capable of transmitting data (e.g., sensor data) from one place to another over the Internet. Examples of the smart devices include smart speakers, smart thermostats, smart lighting, smart lock, smart garage door, smart plugs, smart TVs, smart toys, wearables, smart air conditioning, and other smart appliances. A smart home is a residence that uses internet-connected devices to enable remote monitoring and management and creation of automated routines. Depending on the specific IoT application deployed, various networking, communication, and connectivity protocols may be used with the internet-enabled devices, including, for example, CoAP, DTLS and MQTT, among others. Wireless protocols include IPv6, LPWAN, Zigbee, Bluetooth Low Energy, Z-Wave, RFID, cellular, satellite, Wi-Fi, and Ethernet, among others.

As illustrated in FIG. 5A, the mobile device 520 may include a smart home automation module 525 (such as a software package or a mobile application) operatively in communication with one or more smart devices 540. The home automation module 525 may use an IFTTT technology to enable the mobile cleaning robot 510 to seamlessly connect to a wide range of different services supported by the robot control application on the mobile device 520, as well as from the broader IFTTT-enabled smart home ecosystem. In a way, IFTTT works as a matchmaker between the mobile robot 510 and other smart home devices 540 and/or smart home ecosystem 550 and services, such that they may work together to accomplish conditional cleaning. For example, the mobile robot 510 may be programmed to start cleaning after one or more triggers detect the user is away from home. For example, a trigger may be sent to the mobile robot when a smart front door lock is locked, or when a smart thermostat detects that the user is away from home, or when a smart garage door is closed.

The one or more smart devices 540 may change their respective device operating states when the user enters or exits the user's residence. The smart home automation module 525 may detect the device operating states or changes thereof, and determine an occurrence of the user entering or exiting the home. Such information about user entering or exiting the residence may be received by the mobile cleaning robot 510, and the controller circuit 512 may generate a mission control signal to the drive system 514 to navigate the mobile cleaning robot 510 in the environment and conduct a mission, such as the Away-from-Home Routine 531 in response to one or more smart devices changing their respective operating states indicating the user exiting the home, or the Return-Home Routine 532 in response to one or more smart devices changing their respective operating states indicating the user entering the home. For example, a smart lock that locks the front door, a smart garage that closes the garage door, or a smart thermostat operates on a preset "Away" room temperature, may indicate the user being away from home, which in turn may trigger the controller circuit 512 to generate a control signal to initiate execution of the Away-From-Home Routine 531. Conversely, a smart lock that unlocks the front door, a smart garage that opens the garage door, or a smart thermostat that sets to a preset "Home" room temperature, may indicate the user returning home, which in turn may trigger the controller circuit 512 to generate a control signal to initiate execution of the Return-Home Routine 532, such as to stop cleaning and return to the dock, or to prompt the user for an action with regard to an unfinished mission. The user may have the option to define when the trigger takes action to start or end the mobile robot cleaning mission, such as only on specific days, between specific time windows, and frequency (e.g., only once per day).

In some examples, one or more of the smart devices 540 may be networked and managed by a smart home ecosystem 550. A smart home ecosystem, also referred to as a home automation ecosystem, may include a virtual assistant (the artificial intelligence (Al) service capable of communicating with a user), a speaker (hardware), and a software such as a mobile application run on a mobile device (e.g., a mobile phone or a tablet). One or more smart devices may be configured to pair with the smart home ecosystem and controlled by the software or mobile application on the mobile device. A smart home ecosystem comprises of different networks, including Artificial Intelligence (AI), Internet of Things (IoT) and cloud services, which make the networked devices work smartly. Compared to independent control of different smart devices, a smart home ecosystem gives a user the ability to control multiple networked smart devices (e.g., internet-connected windows, doors, lighting, security, thermostat, home appliance) with one interface. Examples of the smart home ecosystems include Amazon Alexa^{®}, Google Assistant^{®}, and the Apple Home Kit^{®}, among others.

The smart home ecosystem 550 may generate alerts to a user when a connected smart device changes its operating state. The alerts may be voice alerts, or push notifications on the user interface 522 of the mobile device 520, among other forms of notification. In some examples, based on a change in operating states of one or more networked smart devices, the smart home ecosystem may detect an indication of the user entering or exiting the user's residence. Such information about user entering or exiting the residence may be transmitted to the mobile cleaning robot 510, and the controller circuit 512 may generate a mission control signal to navigate the mobile cleaning robot 510 to conduct a mission, such as the Away-From-Home Routine 531 in response to an indication of the user exiting the home, or the Return-Home Routine 532 in response to an indication of the user entering the home, as discussed above.

In some examples, the smart home ecosystem 550 may include a voice-controlled home assistant device configured to receive a voice command of the user to conduct the mission (e.g., "Clean the kitchen."). The voice-controlled home assistant device may include a smart speaker of the smart home ecosystem as discussed above. Examples of the voice-controlled home assistant devices (or the smart speakers) include Amazon Echo^{®}, Google Home^{®}, or Apple HomePod^{®}, among others. The voice-controlled home assistant device may be paired with the mobile cleaning robot 510 and controlled by the mobile device 520. The voice-controlled home assistant device may be trained to recognize the user's voice command, interpret the voice command using a voice interpretation service (e.g., in the cloud computing system 530), and send a control signal to the mobile robot 510. The control circuit 512 may generate a mission control signal to the drive system 514 to navigate the mobile cleaning robot 510 to conduct a mission in accordance with the user's voice command.

### Do-Not-Disturb Routine

The Do-Not-Disturb Routine 533 may include a mission represented by a time period during which the mobile cleaning robot 510 is refrained from executing a mission or performing certain robot actions or making sounds, or temporary suspension, pause, or postponement of an unfinished cleaning mission. A user may create a "No-Run Time" (NRT) schedule, such as a time period on a specific day or days during which the mobile robot may refrain from conducting any mission, a particular type of mission, certain robot actions, or taking actions on any smart home ecosystem trigger. In some examples, two or more distinct NRT schedules with respective time windows can be created and stored in the memory 526. In some examples, the user may set up a NRT for every weekday between 10:00 p.m. and 7:00 a.m. when the household is sleeping, or on one specific day when guests come over between 5:00 p.m. or 10:00 p.m., or when a user is away from home for an extended period of time (e.g. vacation) and wants peace of mind that their mobile robot will absolutely not respond to any automated smart home triggers or routines or pre-defined time-based schedules. A user may create any NRT schedule that works for their life and provide respective descriptive labels for the distinct NRT schedules, such as Quiet Time, Sleep Time, Nap Time, Meal Time, TV Time, Work Time, Meeting Time, Guest Time, Vacation Mode etc. The mobile device UI may offer the user pre-populated, and even personalized, suggestions for specific NRT schedules that the user may toggle on, customize, or delete, based on their routines and cleaning habits. In one example, if the user cancels a cleaning mission starting at a certain time frequently, they may be recommended a personalized NRT schedule during the time in which they frequently cancel missions. The controller circuit 512 may generate a mission control signal to suspend or pause a mission during the time window as specified in the NRT schedule.

As an alternative or in addition to the scheduled NRT, the suspension or pause of a mission may be triggered by a detection, or a received indication, of a specific trigger event or user behavior. Examples of the trigger event may include a doorbell ring, a phone ring, a calendar event, the baby monitor turning on, or user engagement in an audio-sensitive event such as attending a meeting, watching TV, listening to music, or having a conversation. In some examples, a trigger event may be detected automatically based on respective operating states (or respective changes in operating state) of one or more of internet-connected devices, such as the smart devices 540 associated with the user's residence, that are communicatively coupled to the mobile cleaning robot 510. For example, a smart phone, upon detecting a phone ring or an incoming phone call, may send a signal to the mobile cleaning robot 510, triggering the controller circuit 512 to execute the Do-Not-Disturb Routine 533 by suspending or pausing the mobile cleaning robot 510 from cleaning the environment for as long as the smart phone detects that the user remains on the phone. In another example, a smart TV, upon detecting it is being turned on, may send a signal to the controller circuit 512 to execute the Do-Not-Disturb Routine 533 to suspend or pause the cleaning mission for as long as the smart TV remains on. In another example, a smart doorbell, when activated, may send a signal to the controller circuit 512 to execute the Do-Not-Disturb Routine 533 to suspend or pause the cleaning mission temporarily for as long as a smart door detects a door being unlocked. The controller circuit 5 12 may pause the mission, or modify the mission routine such as by rescheduling or postponing the task that interferes with the audio-sensitive event until the audio-sensitive event is over, or as instructed by a user.

In some examples, the Do-Not-Disturb Routine 533 may include suspension or pause of a particular robot action or sound, or a particular task of a mission. Certain robot actions, such as auto-evacuation of collected debris into a receptacle of a dock, cleaning on certain floor types or floor conditions (e.g., edges of a carpeted area), or certain cleaning modes (e.g., deep cleaning), may produce loud noise interfering with user's activities in the environment, such as audio-sensitive activities. In alternative to suspending the entire mission, in some examples, the Do-Not-Disturb Routine 533 may include suspension or pause of certain robot actions or sounds, or avoidance of certain floor conditions or certain cleaning modes, that would normally produce loud noise. As discussed above, the suspension or pause may be based on time (i.e., an NRT schedule) or triggered by a trigger event or user behavior. Accordingly, the Do-Not-Disturb Routine 533 may include, for example, "Do not auto-evacuate after 9:00 p.m. when I am sleeping", "Do not clean carpet 8-00-10-.00 p.m.", "Do not auto-evacuate when I watch TV", or "Do not deep-clean when I am in a phone call", etc. The user may specify that the mobile robot can proceed to clean at night but not run the auto-evacuation during this time. The controller circuit 512 may accordingly pause or suspend the corresponding robot action or cleaning activity at specified time or upon a detection of the specified trigger event. In some examples, in accordance with the Do-Not-Disturb Routine 533, the controller circuit 512 may modify certain robot actions to reduce the noise produced, such as by reducing moving speed, reducing cleaning power, etc.

In some examples, the suspension or pause of a mission may be triggered by a room occupancy state, which indicates a presence or absence of a person in a room. A user may create a Do-Not-Disturb Routine 533 such as "Do not clean the kitchen when someone is there." The room occupancy may be detected automatically based on respective operating states (or respective changes in operating state) of one or more of internet-connected devices, such as the smart devices 540 associated with the user's residence, that are communicatively coupled to the mobile cleaning robot 510. Examples of the smart device for this purpose may include a smart security camera or a smart speaker in the room. Alternatively, the room occupancy may be detected by a camera or other sensors on a mobile robot. The controller circuit 512 may accordingly pause or suspend the mission, or reorder cleaning order of rooms, upon a detection of the room being occupied, or modify the mission routine, such as by postponing the task scheduled to be performed in the occupied room until it is no long occupied, or as instructed by a user.

In accordance with the Do-Not-Disturb Routine 533, the mobile cleaning robot 510 can be unresponsive to a cleaning command. In some examples, such a "no response" state may be overridden via the mobile device 520 (e.g., via the user interface and through the mobile application), voice control, or directly on the cleaning robot 510. Both the mobile device UI and the smart speaker may provide the user with reminders and warnings if the home is in a designated Do-Not-Disturb Routine and offer users an option to override the NRT. In some examples, a push notification or an alert may be generated and presented to the user (such as via the mobile device 520) to indicate the Do-Not-Disturb Routine 533 is about to begin, or about to end, such as approaching the end of the time window for No-Run Time, or a termination of the trigger event (e.g., end of a phone call, smart TV turning off). The user may use UI controls on the user interface 522 to confirm, reject, or modify the Do-Not-Disturb Routine. While the user may still press the mobile robot's physical button to start cleaning during a NRT, the user may have an option in the mobile device UI to also disable this physical button as an extra precaution. The user may have the option in the mobile device UI to disable other robot sounds or voices as part of a Do-Not-Disturb Routine such as error messages or location.

The controller circuit 512 may resume the mission at the expiration of the "No-Run Time", or in response to an indication that the condition that triggers the Do-Not-Disturb Routine 533 is no longer satisfied (e.g., the audio-sensitive event ends, or the room is no longer occupied), or as instructed by a user. In some examples, the controller circuit 512 may operate the mobile cleaning robot 510 in a multi-mission mode 518. This allows the mobile cleaning robot to complete a cleaning mission in multiple separate sessions at different times, such as a series of time windows over a specified number of days (e.g., 3 days or 7 days). The control circuit 512 may track the progress of the mission including a mission completion status, such as areas that have been cleaned, and/or areas left unfinished such as due to "No-Run Time" or "Do-Not-Disturb" routines, or a routine with time constraints (e.g., time-boxed mission 535 as to be discussed in the following). At the end of the "Do-Not Disturb" period, the control circuit 512 may trigger the mobile cleaning robot to resume the unfinished job immediately, or postpone the unfinished job to a subsequently scheduled time window. Notification including a summary of coverage of the mission across different time windows, along with other metrics, may be displayed to the user. In some examples, suggestions such as adjusting the multi-mission schedule for future time windows over a specified number of days may be presented to the user.

### Guest Routine with Time-Boxed Mission

The Guest Routine 534 may include a mission to be performed during a pre-set time period which, in an example, can be shorter than that generally needed to complete the entire mission when the mobile robot operates in its typical cleaning mode (e.g., the mobile robot moves at normal speed, cleans using uniformly the full cleaning power, and cleans all reachable floor surfaces of the areas as specified by the mission.) Such a mission constrained by time is also referred to as a time-boxed mission 535. In contrast to some cleaning missions purported to maximize the amount of dirt or debris removed, one objective of the Guest Routine 534 is to maximize the visible area cleaned under the time constraint. For example, in a scenario where a cleaning is to be performed before a guest coming in 30 minutes (and thus the name "Guest Routine"), the goal of cleaning is to have only those visible areas look clean. The mobile cleaning robot need not clean areas invisible or less-observable to the guest, but may instead prioritize the visible areas, such as large open spaces that guests would see and where they may notice visible dirt.

The time-boxed mission 535 may be created or modified by the user via the user interface 522. For example, the user may define a time window by providing a beginning time and an end time. Alternatively, the user may provide a time duration (time window) for the time-boxed mission 535, such as, by way of example and not limitation, a 15-minute window, a 30-minute window, or a 45-minute window. In some examples, a user may make a selection from a pre-populated plurality of time windows for the time-boxed mission 535. Other time durations may be provided or selected by the user. In some examples, a user may create time-boxed missions for one or more user-specified days with respective pre-set time windows, such as a 30-minute time-boxed mission each day from Monday through Thursday, and a 45-minute time-boxed mission each day Saturday and Sunday.

Although the time-boxed mission 535 is discussed herein in association with the Guest Routine 534, this is provided as an example but not limitation. In some examples, the time-boxed mission 535 may be combined with other routines, such as Away-From-Home Routine 531, Return-Home Routine 532, or Do-Not-Disturb Routine 533, among others. Examples of such routines may include, for example, "Start clean when I leave home, for 30 minutes", or "Start clean for 10 minutes before I return home".

The time-boxed mission 535 include one or more areas to be cleaned during the pre-set time window. A user may specify or select, via the user interface 522, one or more areas to be included in the time-boxed mission 535. An example of the time-boxed mission 535 thus created may be represented by "Clean the kitchen and dining rooms in 15 minutes." In some examples, the mobile cleaning robot 510 may dynamically determine one or more areas to be included in the time-boxed mission 535 based on respective estimated time of completion (ETC) of cleaning respective areas. For example, if a 15-minute window is selected for the time-boxed mission 535, and that the ETC's (such as based on previous cleaning experience) are 8 minutes to clean the kitchen, 6 minutes to clean the dining room, and 20 minutes to clean the living room, then the mobile robot would include only the kitchen and the dining room into the time-boxed mission 535 to fit into the 15-minute time window.

The time-boxed mission 535, if defined by user-specified beginning and end times, may be initiated based on time. Alternatively, the time-boxed mission 535 may be initiated by a user command, such as via a mobile application through the user interface 522 or a voice command. In some examples, the time-boxed mission 535 may be initiated by a trigger event. An example of the trigger event is an indication of the user entering or exiting a pre-defined geographical zone with respect to a location of user's residence. As discussed above with reference to Away-From-Home Routine 531 and the Return-Home Routine 532, the state of the user being away from home or returning home may be detected or validated using the location service 523 and the geofencing module 524. An example of the time-boxed mission 535 thus created may be represented by, "Start cleaning when I am away, but finish the cleaning in 30 minutes." In response to an indication of the mobile device 520 exiting the geofence (indicating the user is away from home), the mobile cleaning robot 510 may be automatically activated to execute the time-boxed mission 535 of the Guest Routine 534. Alternatively, the mobile cleaning robot 510 may be triggered to execute the time-boxed mission 535 in response to an indication of the mobile device 520 entering the geofence (indicating the user is returning home). Another example of the trigger event to initiate the time-boxed mission 535 may include a detection of a specific user behavior such as detected by one or more internet-connected devices associated with the user's residence, as discussed above with reference to Away-From-Home Routine 531 and the Return-Home Routine 532.

A user may provide a name or identifier for the Guest Routine 534, such as "Quick Clean Routine", "30-minute Pre-party routine", etc. The created Guest Routine 534 may be stored in a memory 526 of the mobile device 520. Alternatively, the mission routine may be stored in the cloud computing system 530 accessible by the mobile device 520.

Because the time-boxed mission 535 of the Guest Routine 534 is constrained by a generally short time window, the mission may be left unfinished at the expiration of the time window, particularly if the mobile robot is set to clean large floor areas and/or if the mobile robot operates in its regular mode 515. In certain occasions, it may be desirable to avoid or reduce the chance of mission incompleteness, and to maximize the mission completion rate. The controller circuit 512 of the mobile cleaning robot 510 may, automatically or in response to a user instruction, operate the mobile cleaning robot in one of several different modes, including, for example, a regular mode 515 , a turbo mode 516, or a multi-mission mode 518, among others. The regular mode 515 refers to a full and thorough clean of designated areas with a regular traversing speed and a regular cleaning power. In contrast to the regular mode 515, the turbo mode 516 refers to quick and/or prioritized cleaning, such as due to a time constraint (e.g., the time-boxed mission 535), at the expense of cleaning thoroughly. The multi-mission mode 518 refers to scheduling a mission into multiple sessions separate in time. Although the turbo mode 516 is discussed herein in association with the time-boxed mission 535 of the Guest Routine 534, this is provided as an example but not limitation. In some examples, the turbo mode 516 may be used with other mission routines, such as Away-From-Home Routine 531, Return-Home Routine 532, or Do-Not-Disturb Routine 533, among others.

Referring to FIG. 5B, the turbo mode 516 may be enabled by one or more of a prioritized cleaning module 582, a path-scheduling module 584, a quick motion module 586, and a coordinated cleaning module 588. One or more of those modules, among others, can reduce mission operation time and avoid or reduce the chance of a unfinished mission such as the time-boxed mission 535. The prioritized cleaning module 582 may prioritize areas based on one or more floor conditions or properties, and the mobile robot can then generate a mission control signal to trigger the mobile cleaning robot to conduct the mission in accordance with the prioritized areas during the pre-set time window.

In an example, the prioritized cleaning module 582 may prioritize cleaning areas based on locations and observabilities thereof. As one objective of the Guest Routine 534 is to maximize the visible area cleaned, using the prioritized cleaning module 582 to identify and prioritize those visible areas (e.g., large open spaces where dirt, if any, is more noticeable) over invisible or less-observable areas (e.g., floor underneath furniture like couches, low tables, and beds; floor in closets, bedrooms, or other rooms or areas less likely be accessed by the guest) may reduce cleaning time and thus avoid an unfinished mission.

In an example, the prioritized cleaning module 582 may prioritize cleaning areas based on a spatial distribution of dirt detected in the one or more areas. The mobile robot may detect dirty areas in the environment, and generate dirt detection events. The dirty areas may be detected based on images taken from an imaging sensor (e.g., a front-facing camera) on the mobile robot, or from an external camera associated with the environment. In an example, the external camera can be an internet-connected smart camera in communication with the mobile cleaning robot 510 and the mobile device 520. The external camera that is mounted higher up in a room may provide better information about what parts of the environment look dirty from a higher vantage point. The external camera may also provide a real-time map of the environment of a portion thereof without the mobile cleaning robot needing to travel around the house, making it easier to prioritize cleaning areas based on dirt conditions therein.

The mobile robot may prioritize dirtier areas over less dirty areas. In some examples, a heatmap of dirtiness representing a spatial distribution of the dirt detection events across the one or more areas may be generated. Based on the heatmap of dirtiness, the mobile robot may prioritize areas that are more frequently cleaned or more heavily cleaned over less-frequently cleaned or less-heavily cleaned areas.

In an example, the prioritized cleaning module 582 may prioritize cleaning areas based on floor types thereof. Certain floors types (the "dirt-hiding" floor types, e.g., thick carpets) are more likely to disguise dirt or debris that other floor types (the "dirt-revealing" floor types, e.g., hardwood floor or short carpets). When different floor types are involved in the one or more areas of the time-boxed mission 535, the mobile robot may prioritize the dirt-revealing floor types over the dirt-hiding floor types when performing the time-boxed mission 535.

In an example, the prioritized cleaning module 582 may prioritize cleaning areas based on floor colors thereof. For example, light-colored floors may have high contrast even under low lighting conditions, which makes dirt or debris more visible than dark-colored floors with low contrast. When floors of different colors are involved in the one or more areas of a cleaning mission (e.g., the time-boxed mission 535), the prioritized cleaning module 582 may prioritize the light-colored floor over the dark-colored floor types such that the light-colored floors get cleaned before the dark-colored floors.

The path planning module 584 may identify one or more avoidance spots in the one or more areas, such as a clutter or an obstacle therein. In some examples, information about the avoidance spots may be identified by a user on a map of the environment. The path planning module 584 may schedule a coverage path covering at least a portion of the one or more areas and to avoid the avoidance spots. The controller circuit 512 may navigate the mobile cleaning robot 510 to traverse the one or more areas in accordance with the scheduled coverage path to conduct the mission (e.g., the time-boxed mission 535).

The avoidance spots may additionally or alternatively include floor areas close to a wall. Cleaning areas close to the wall may cause the mobile robot to wall follow, during which the mobile robot may frequently adjust its heading to remain engaged with the wall, which can be time-consuming. Avoiding the wall areas can reduce the chance of wall following. Alternatively, additional sensors may be used to allow the mobile cleaning robot to stay close to the wall without constant heading adjustment.

The avoidance spots may include hazardous areas where the mobile robot likely gets stuck. Getting stuck during a mission and escaping therefrom can be time-consuming, and reduce the chance of mission completion. For urgent time-boxed missions with a tighter time constraint (i.e., a shorter time window), avoiding hazards may substantially save time and improve mission execution efficiency. For example, although deeper and riskier clean of certain tough-to-clean areas may be desirable in general, a less aggressive and safer clean can be more suitable for turbo mode cleaning. Additionally, as the mobile robot may drive at a faster speed (e.g., enabled by the motion module 586 as discussed below) and thus a higher momentum in a turbo mode, thresholds in the environment may be less risky to cause robot to stuck. However, wedge hazards may be more hazardous, because a faster robot may get wedged deeper into the hazard. Accordingly, in some examples, the path planning module 534 may schedule a coverage path such as to avoid wedge hazards, particularly if the mobile robot drives at a higher speed in a turbo mode.

The path planning module 584 may additionally schedule the coverage path with improved snaking patterns. A snaking pattern is a path comprising a set of linear path segments connected by a number of 180-degree turns (a change in direction of motion) therebetween. Moving in a snaking pattern can be faster than perimeter wall following. Various improvements of snaking patterns have been contemplated by the present inventors. In an example, the snaking pattern may be characterized by reduced number of 180-degree turns connecting linear path segments. When turning, the robot may bump an obstacle, stop, back up, and turn before it begins the next rank. This behavior is time consuming. By choosing snakes that minimize the number of turns, the snake cleaning rate can be increased for the turbo mode. In another example, the snaking pattern may be accompanied by faster turns between ranks. For example, the mobile cleaning robot may use a front-facing camera to detect obstacles before bumping them. In yet another example, the snaking pattern may include an increased rank width, such as enabled by a wider cleaning head. In another example, the snaking pattern may be characterized by a reduced overlap between adjacent ranks. By reducing the rank overlap, the mobile robot needs fewer ranks per snake and may have a faster cleaning rate. A mobile robot generally moves faster when traveling in a straight line than when making a turn, during which the mobile robot typically needs to decelerate before, and accelerate after making the turn. Turn-minimizing or turn-reducing techniques and the resulting snaking patterns are discussed in U.S. Patent Application No. 20200089255, the entirety of which is hereby incorporated by reference. In some examples, the snaking pattern may include negative rank overlap, represented by a gap between ranks. The gap area may be left uncleaned, or may be cleaned by side brushes that agitate dirt or debris therein and get picked up by the mobile robot. Snaking with negative rank overlap may substantially improve the cleaning rate without significantly affecting the appearance of cleanliness.

The quick motion module 586 may generate a control signal to the drive system 514 to move the mobile cleaning robot 510 at a speed based on the time allocated for the mission, such as boxed time for the time-boxed mission 535. In another example, the quick motion module 586 may generate a control signal to the cleaning system of the mobile robot to drive the motorized cleaning elements (e.g., roller motor 120 driving the rotatable members 118, the brush motor 128 driving the side brush 126, and a suction fan motor 316 powering the vacuum system 119) at a power based on the time allocated for the mission, such as boxed time for the time-boxed mission 535. For example, the driving speed of the mobile robot and/or the motor power driving the cleaning elements may be inversely proportional to the time allocated for the time-boxed mission 535, such that the mobile robot may operate at a higher driving speed and/or higher cleaning power under a tighter time constraint (e.g., a shorter time window).

Certain missions may require two or more mobile robots to perform their respective tasks sequentially or in an interleaved manner, as there will be precedence constraints between the robots. For example, a kitchen floor may be cleaned first by a mobile dry-cleaning robot (e.g., vacuum robot), followed by a mobile wet-cleaning robot (e.g., a mopping robot). Such a sequential cleaning by two mobile robots may be time consuming for a time-boxed mission. The coordinated cleaning module 588 may schedule coordinated cleaning between at least two mobile robots (or different cleaning modes in one mobile robot) to reduce the time for completing a mission, such as the time-boxed mission 535. The controller circuit 512 may navigate the mobile cleaning robot 510 to traverse the environment in accordance with the scheduled coordinated cleaning. In the above example of cleaning a kitchen using two mobile robots, the coordinated cleaning module 588 may generate a schedule to keep the dry-cleaning robot only on the floor areas that the wet-cleaning robot cannot clean. In an example, wet-cleaning robot may clean certain areas without first being cleaned by the dry-cleaning robot. The wet-cleaning robot's cleaning pad would likely collect more debris that the dry-cleaning robot would normally clean up. This may result in a broader coverage of areas being cleaned even if certain floor areas are not quite as clean. In an example, the coordinated cleaning module 588 may schedule for each robot respective areas to cover. In another example, as wet cleaning is generally slower than dry cleaning, the coordinated cleaning module 588 may generate a schedule to use only the dry-cleaning robot. In another example, front-facing camera (or a sensor underneath the robot) may be used to identify sticky spots on the floor that are difficult to be dry cleaned. In this case, the wet-cleaning robot may only be used to perform spot cleaning on the identified sticky spots, while the dry-cleaning robot picks up dry debris everywhere. To improve the efficiency of coordinated cleaning, various mobile robots (e.g., the dry-cleaning robot and the wet-cleaning robot) may communicate with each other. In an example, the various robots may be networked and managed by a smart home automation ecosystem. Improved coordination may help improve mission completion rate under time constraint. For example, a dry-cleaning robot need not waste time waiting for a wet-cleaning robot, or performing dry cleaning activity prematurely.

The turbo mode 516, as discussed above with reference to FIG. 5B, may improve the cleaning efficiency and help reduce the chance of mission incompletion by the end of the allocated time. Returning to FIG. 5A, at the expiration of the pre-set time window of the time-boxed mission 535, the controller circuit 512 may generate a mission control signal to trigger the mobile cleaning robot 510 to return to a dock, regardless of the mission completion status. In an example, the controller circuit 512 may track the progress of the mission including a mission completion status. If the mission is unfinished by the expiration of the time window, the controller circuit 512 may generate the mission control signal to trigger the mobile cleaning robot to abort, suspend, or pause the unfinished mission, or postpone the unfinished mission to a subsequently scheduled time.

### Multi-Mission Mode

In some examples, the controller circuit 512 may operate the mobile cleaning robot 510 in a multi-mission mode 518. This allows the mobile cleaning robot 510 to schedule a cleaning mission across multiple sessions at different times, such as a series of time windows over a specified number of days (e.g., 3 days, 7 days). The control circuit 512 may track a progress of the mission including a mission completion status, such as areas that have been cleaned, and areas left unfinished by the expiration of the time window. The control circuit 512 may trigger the mobile cleaning robot to resume the unfinished mission at the next time window in accordance with the multi-mission schedule. By of way of example and not limitation, time-boxed mission 535 may be conducted under the multi-mission mode 518, such that the unfinished job at the expiration of a present time window may be automatically assigned to the next scheduled time window. The multi-mission mode 518 may similarly be used when the mobile robot conducts other mission or routines, such as the Away-From-Home Routine, the Return-Home Routine 532, or the Do-Not-Disturb Routine. Notifications such as a summary of coverage of the mission across different time windows, along with other metrics, may be displayed to the user. In some examples, suggestions such as adjusting the multi-mission schedule for future time windows over a specified number of days may be presented to the user.

### Examples of A User Interface for Mission Scheduling and Robot Control

FIGS. 6A-6G are, by way of example and not limitation, wireframes of a user interface for creating and managing a mission routine, and controlling a mobile robot (such as the mobile cleaning robot 510) to execute a mission in an environment. The user interface may be a part of a mobile device, such as the user interface 522 of the mobile device 520. The user interface as described herein can be configured to present, on a display, information about one or more robots in a user's home and their respective operating status, one or more editable mission routines (e.g., a cleaning mission), a progress of a mission being executed, among other information. In some examples, a map of the environment or a portion thereof may be displayed along with objects in the environment. The user interface may also receive user instructions, such as via the user interface 522, for creating or modifying a mission routine and controlling robot navigation and mission execution.

FIG. 6A illustrates an example of a user interface 600A that displays options for scheduling a mission, such as a cleaning mission for the mobile cleaning robot 510, based on geofencing, smart devices, or a home automation ecosystem. As illustrated, new missions may be scheduled using time-based scheduling 611, or scheduling by automation 612. The scheduling by automation 612, as discussed above with reference to FIG. 5A, refers to scheduling a robot mission based on an automatic detection of a specific trigger event or user behavior, such as automatic detection of user being away from home or returning home. FIG. 6A illustrates an example of using the scheduling by automation 612 to create a "Start when I leave home" routine, corresponding to the Away-From-Home Routine 531 as discussed above. Depending on how the user being away from home or returning home is detected or validated, the "Start when I leave home" routine may be created using location and geofencing service-based approach 613, a smart device-based approach 614, or a smart home ecosystem-based approach 615 (e.g. Google Home^{®} or Amazon Alexa^{®} smart home ecosystems). The location and geofencing service-based approach 613 may use, for example, the location service 523 and the geofencing module 524 to detect when the user is away from home or returning home. To use the location and geofencing service-based approach 613 to enable scheduling by automation, the user may be prompted to authorize access of the mobile device's location service. The mobile device's location may be shared with the mobile cleaning robot.

To use the mobile device's geofencing service, a user may define a geofence using a map displayed on the user interface, which shows the user's home location 616 and surrounding region. The user may use map viewing tools 619 to manipulate the map such as to zoom in or zoom out a region on the map, to translate or rotate a region, or to re-center the home location 616 on the map view. The user may draw on the screen of the user interface, or using user interface (UI) controls to define, a geographical zone 617 with respect to the home location 616, such as boundaries around the home location 616. The geographic zone 617 is a geofence that defines virtual boundaries around the home location 616. The geographic zone 617 can have a user-defined shape and/or size. In an example as illustrated in FIG. 6A, the geographic zone 617 has a circular shape centered on the home location 616 with a user-defined radius 618. The user may zoom in or out the map using the use the map viewing tools 619 to facilitate adjustment of the radius 618. The geographic zone 617 may have other shapes (e.g., square, rectangle, triangle, or arbitrary shapes) with respective geographical dimensions (e.g., distances from the borders of the geographic zone 617 to the home location 616). Information about the geofence, such as the home location 616, the geographic zone 617, and the user-defined radius 618, may be stored in the mobile device 520.

The geofencing service can detect an indication of the user entering or exiting the geofence based on the present geographical location of the mobile device (as provided by the location service) relative to the geographic zone 617. For example, in response to a detection of the user (the mobile device) exiting the geographic zone 617, the mobile robot may start a mission such as in accordance with the Away-From-Home Routine 531. In response to a detection of the user (the mobile device) entering the geographic zone 617, the mobile robot may start a mission such as in accordance with the Return-Home Routine 532, as discussed above.

As an alternative to the location and geofencing service-based approach 613, the smart device-based approach 614 or the smart home ecosystem-based approach 615 may provide the user with a choice of one or more smart devices or smart home ecosystems that detects and validates the user being away from home or returning home. As discussed above with reference to FIG. 5A, IFTTT technology may be used to match between the mobile robot 510 and other smart home devices 540 and/or smart home ecosystem 550 and services, so they can work together to accomplish conditional cleaning. Examples of the IFTTT-enabled smart devices and smart home ecosystems, as illustrated in FIG. 6A, may include smart locks (e.g., August locks) detecting whether door locks or unlocks, a smart home lighting system (e.g., Leviton light switches) that senses room lighting status and detects if the user is home away or returning home, or a smart garage (e.g., MyQ garage) that senses garage door opening and closing and detects if the user is home away or returning home, or a smart thermostat (e.g., Ecobee thermostats) that senses if the user is home away or returning home based on the room temperature settings. Examples of the smart home ecosystems may include, for example, Amazon Alexa^{®} and Google Assistant^{®}, that may be selected to detect an indication of the user entering or exiting the user's residence. As discussed above with reference to FIG. 5A, the mobile cleaning robot 510 may receive such an indication, either from one or more smart devices or from a smart home ecosystem, and generate a mission control signal to the drive system 514 to move the mobile cleaning robot 510 to the environment to conduct a mission in accordance with a mission routine, such as the Away-From-Home Routine 531 in response to an indication of the user exiting the home, or the Return-Home Routine 532 in response to an indication of the user entering the home.

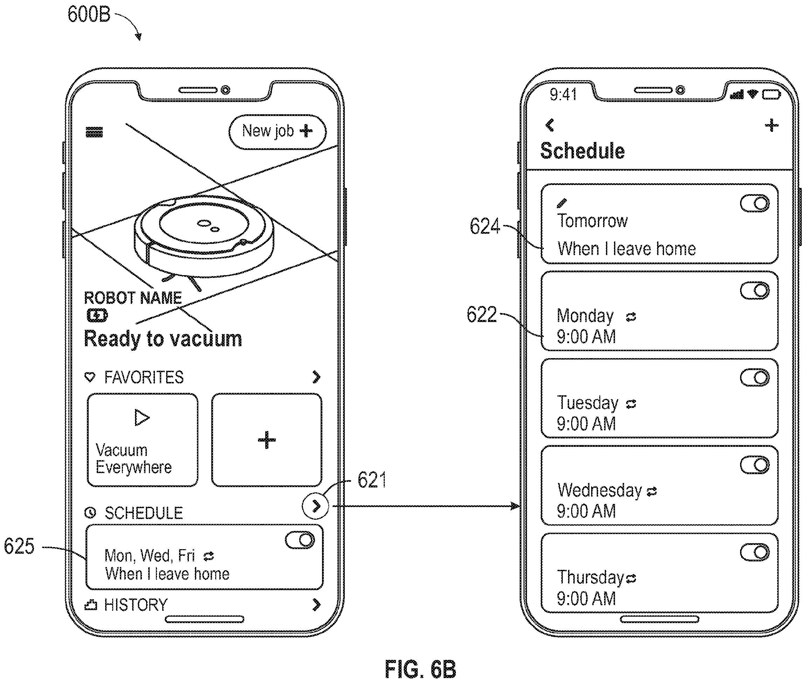

FIG. 6B is a wireframe of a user interface 600B illustrating an example of creating daily schedules of time-based or event-triggered missions. The daily schedules may be set up using time-based scheduling 611, or scheduling by automation 612. In the illustrated example, a recurrent mission 625 "When I leave home" has been created using scheduling by automation for every Monday, Wednesday, and Friday. A user may use the UI control button 621 to modify this schedule, such as by setting or changing one or more days of a week to time-based schedule 622 (e.g., starts cleaning at 9:00 a.m.), and setting or changing one or more other days to "When I leave home" 624 which is scheduled by automation. A user may also choose to run the scheduled mission the first time he/she leaves home, or run it every time he/she leaves home on the specified day(s).

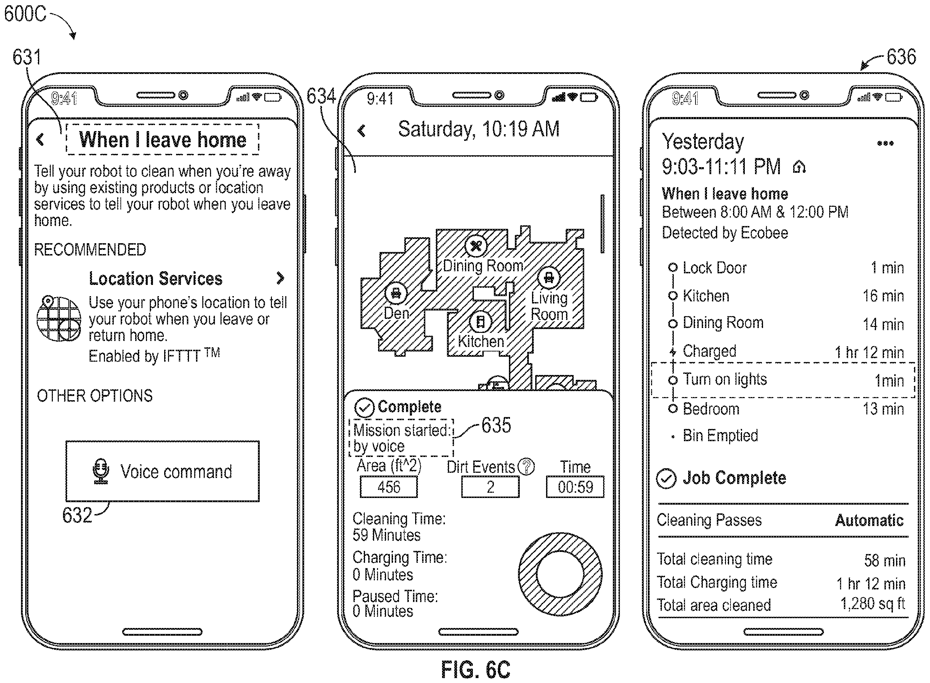

FIG. 6C is a wireframe of a user interface 600C illustrating an example of setting up a smart home routine including cleaning missions for a mobile cleaning robot, such as a "When I leave home" routine 631 as illustrated. Similar to the "Start when I leave home" routine as illustrated in FIG. 6A, the "When I leave home" routine 631 may be created using a location and geofencing service-based approach 613, a smart device-based approach 614, or a smart home ecosystem-based approach 615 (e.g. Google Home^{®} or Amazon Alexa^{®} smart home ecosystems). Additionally or alternatively, the user may activate a mission routine such as the "When I leave home" routine 631, using a voice command 632. The voice command 632 may be received by a voice-controlled home assistant device, which can be a part of the home automation ecosystem. In an example, the user may issue the voice command 632 to inform a networked device to begin or end a mission, or to perform specific tasks. In an example, the voice command 632 may be "Set my home to AWAY." In another example, the voice command 632 may be directed to a mobile robot "Roomba" (e.g., "Ask Roomba to go home", or "Ask Roomba to start cleaning.") Additionally, through the user interface, the user may create a schedule with actions for the robot to trigger, such as turning on the lights or locking the door. An environment map 634 may be displayed on the user interface to illustrated the location and operating status of the mobile robot and a progress of the cleaning mission. In some examples, information about the trigger of the mission 635 (e.g., location and geofencing services, smart devices, or smart home ecosystems, or voice command as illustrated in FIG. 6C) may also be displayed on the user interface. Information about the mission performed 636 during the "When I leave home" period, such as rooms or areas cleaned, time taken for cleaning, and job completion status, among other information on mobile robot status, may be displayed on the user interface.

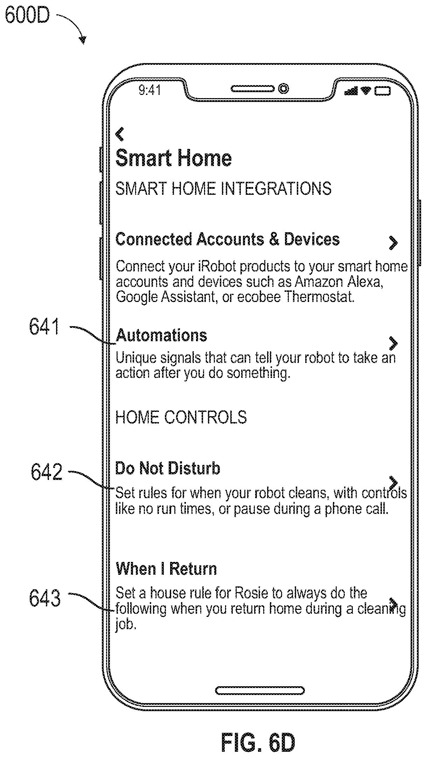

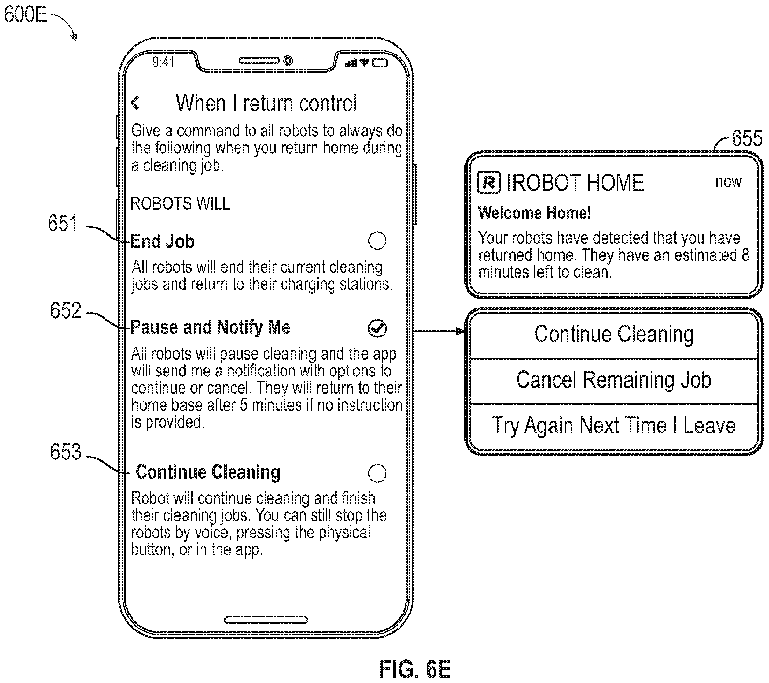

FIGS. 6D-6F are wireframes of a user interface illustrating examples of setting up smart home control of various devices including, for example, the mobile robot 510. The user interface 600D of FIG. 6D illustrates a smart home controls that may include mission scheduling by automation 641, which enables detecting user entering or exiting the home, or a geofence around the home, using one or more of location and geofencing services, smart devices, or smart home ecosystems. The smart home controls may also allow a user to create a "Do-Not-Disturb" routine 642 and/or a "When I Return" routine 643. The "Do-Not-Disturb" routine 642 is an example of the Do-Not-Disturb Routine 533, and the "When I return" routine 643 is an example of the Return-Home Routine 531. FIG. 6E illustrates a user interface 600E showing selectable commands for the "When I Return" routine 643, including an "End job" command 651, a "Pause and notify me" command 652, or a "continue cleaning" command 653. The "End job" command 651, if selected, may direct the mobile robot to end the current mission and return to the dock. The "Pause and notify me" command 652, if selected, may direct the mobile robot to pause the ongoing mission. A push notification 655 may be displayed on the user interface, and the user may be prompted to provide further instructions with regard to an unfinished mission. The user may choose to continue cleaning, cancel the remaining job, or resume the unfinished mission next time the user leaves home. If the user chooses to continue the mission the next time the user leaves home, the cleaning robot may return to the dock and charge until the next time the user has left home. The "continue cleaning" command 653, if selected, may direct the mobile robot to continue to finish the presence mission. The selected command and the robot action may be overridden via the mobile device (e.g., via the user interface and through the mobile application), voice control, or directly on the cleaning robot (e.g., by pressing a physical button on the mobile cleaning robot to cancel the present mission).

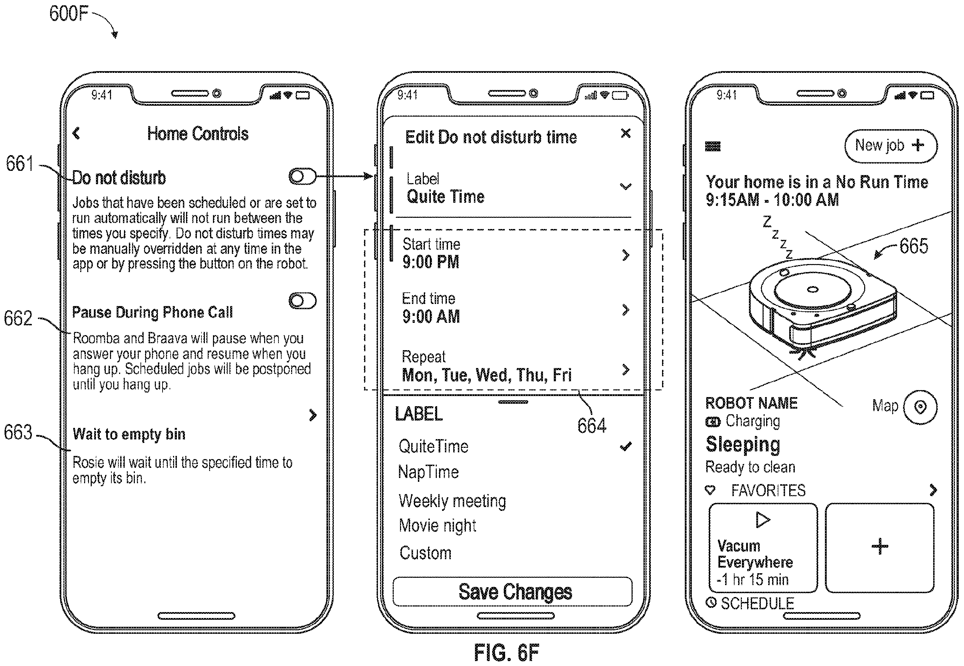

FIG. 6F illustrates a user interface 600F with examples of routines for home control including one or more of a "Do Not Disturb" control 661, a "Pause during phone call" control 662, and a "Wait to empty bin" control 663. The "Do Not Disturb" control 661, similar to the Do-Not-Disturb Routine 553 as discussed above, if selected, allows a user to set or modify a "No Run Time" time window (e.g., between 9:00 p.m. - 9:00 a.m.) during which the mobile robot is refrained from conducting any mission, or a particular type of mission or a particular robot action. In some examples, the "No Run Time" can be set for one or more days, such as Monday through Friday on a recurring schedule 664. A user may optionally provide respective descriptive labels for a plurality of distinct "No-Run Time" schedules, such as Quiet Time, Sleep Time, Nap Time, Weekly Meeting Time, Meal Time, TV Time, Movie Night, Work Time, etc. When the "Do Not Disturb" control 661 is activated, a push notification 665 may be displayed to indicate that the mobile robot is in a No-Run-Time state during the pre-set time window. In some examples, the UI may indicate that the robot is in a No-Run-Time on the home screen and may offer the user the ability to do a one-time override of the setting without deleting or turning off the routine, in which case the user may start the robot from the mobile app. This may be beneficial for cases when the need for cleaning arises outside the user's normal routine.

The "Pause during phone call" control 662, if activated, allows a smart phone, upon detecting a phone ring or an incoming phone call, to send a signal to the mobile cleaning robot to suspend or pause the ongoing cleaning mission for as long as the smart phone detects that the user remains on the phone. The postponed mission may be resumed automatically such as in response to a detection of the user hanging up, or upon receiving a user confirmation to resume. Similarly, the user may specify other trigger events or user behaviors (e.g., watching TV, listening to music, having a conversation, when a doorbell rings, or when the room is occupied by a person) that would trigger the suspension or pause of a mission. The user may be able to control how the robot behaves in each specific instance, such as to control the robot to either pause in place or return to dock and charge until the event ends.

The "Wait to empty bin" control 663, if activated, allows the mobile robot to suspend or postpone evacuation action (emptying the bin of the mobile robot and drawing debris into a receptacle of a dock), which may produce loud noise and thus interfere with user's activities in the environment. Similarly, the user may specify other high-noise robot activities, such as cleaning on certain floor type or floor condition (e.g., edges of a carpeted area), or certain cleaning mode (e.g., deep cleaning), that would trigger the suspension or pause of a mission. In some examples, the user may choose to disable all robot sounds, such as error messages or cleaning start/end songs during this time.

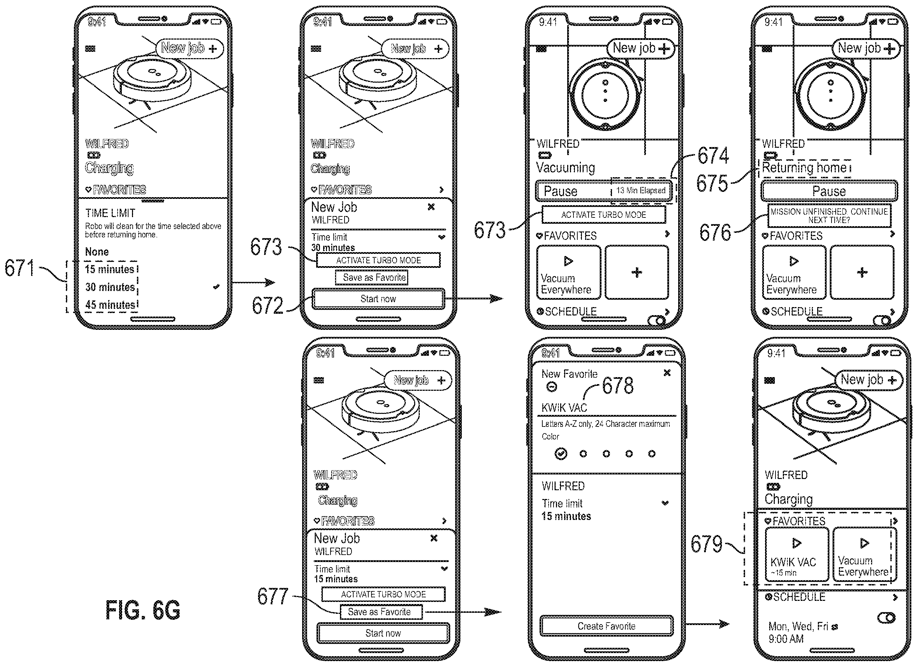

FIG. 6G illustrates, by way of example and not limitation, wireframes of a user interface illustrating setting up a Guest Routine that involves a time-boxed mission, such as the time-boxed mission 535 as discussed above with reference to FIG. 5A. A user may make a selection from a pre-populated plurality of time windows 671, such as a 15-minute window, a 30-minute window, or a 45-minute window. The user may then use a UI control button 672 ("Start Now") to activate the time-boxed mission. Tasks involved in the time-boxed mission (e.g., one or more areas to be cleaned) may be automatically determined, such as based on the ETC for one or more areas as previously discussed. Additionally or alternatively, the user may specify one or more areas to be included in the time-boxed mission, such as by selecting from a map or a list of areas (e.g., rooms) displayed on the user interface.

As illustrated, the user may use a UI control button 673 to activate the turbo mode. Alternatively, the turbo mode may be set as default, and activated automatically at the commencement of the time-boxed mission. Mission progress may be displayed on the user interface, such as time elapsed 674, or estimated remaining time. During the execution of the time-boxed mission, the user may use the UI controls to pause the mission, or activate or deactivate the turbo mode.

At the end of the allocated time (e.g., 30 minutes in this example), a notification 675 is presented to the user, indicating the mobile robot is returning to the dock. In some examples, mission completion status may be displayed. If the mission is not completed, a push notification 676 may be displayed, and the user may choose to continue the mission next time from where it is left off, such as in accordance with the multi-mission mode 518 as discussed above with reference to FIG. 5A.

The user may use the UI control button 677 to store the Guest Routine, including the time-boxed mission, in the mobile device or the cloud computing system 530. The Guest Routine, along with other mission routines, may be categorized as "favorites" shelved in the mobile device or the cloud computing system 530 accessible by the mobile device. The user may provide a name or identifier (e.g., color code) for the Guest Routine, such as "KWIK VAC" routine 678. The Guest Routine thus created may be displayed on the "favorites" shelf 679.

### Examples of Methods of Scheduling a Mission and Controlling a Mobile Robot

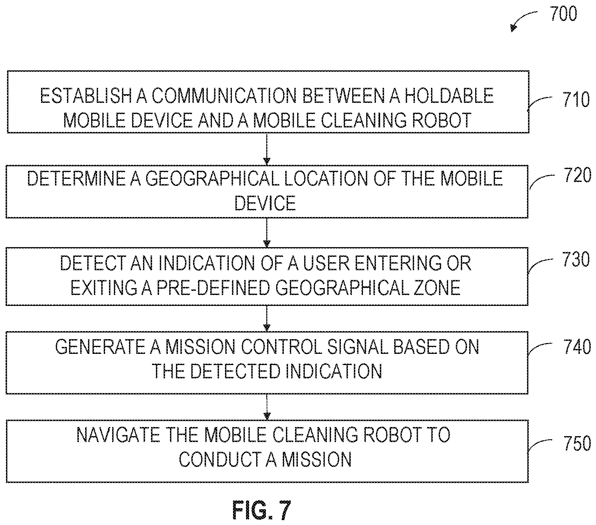

FIG. 7 is a flow diagram illustrating an example of a method 700 of generating and managing a mission routine, and controlling a mobile robot to execute a mission in an environment in accordance with the mission routine. The method 700 can be implemented in, and executed by, the mobile robot system 500. The method 700 may be used for scheduling and controlling one or more mobile robots of various types, such as a mobile cleaning robot, a mobile mopping robot, a lawn mowing robot, or a space-monitoring robot.

The method 700 commences at step 710 to establish a communication between a mobile device holdable by a user (such as the mobile device 404 or the mobile device 720) and a mobile robot (such as the mobile robot 100 or the mobile cleaning robot 510). The mobile device can execute device-readable instructions implemented therein, such as a mobile application. The communication between the mobile device and the mobile robot may be via an intermediate system such as the cloud computing system 406 or the cloud computing system 530, or via a direct communication link without an intermediate device of system. In an example, the mobile device may include a user interface (UI) configured to display robot information and its operating status. A user may manage one or more active mobile robots and coordinate their activities in a mission. In an example, a user may use UI controls to add a new mobile robot such as by establishing a communication between the mobile device and the new mobile robot, or remove an existing mobile robot such as by disconnecting a communication between the mobile device and the existing mobile robot.

At 720, a geographical location of the mobile device can be determined, such as the location service 523 implemented in the mobile device. In an example, the geographical location may be determined based on GPS, RFID, Wi-Fi or cellular data.

At 730, an indication of the user entering or exiting a pre-defined geographical zone (also referred to as a geofence) with respect to a location of the user's residence may be detected based on the determined geographical location of the mobile device. The mobile device may include an display unit to display a map showing the location of the user's residence, and input tools (e.g., UI controls) to allow a user to define the geographical zone with respect to the user's residence location. In an example, the user may define the geofence as a circular shape centered on the location of the user's residence and a user-defined radius, an example of which is illustrated in FIG. 6A. As the mobile device is generally held by or otherwise associated with the user, location of the user can be inferred to be substantially the same as the location of the mobile device. Tools such as the geofencing module 524 may be used to track the location of the mobile device (thus the location of the user) relative to the geofence, and determine when the user enters into, or exits, the geofence.

At 740, a mission control signal may be generated based on detected indication of the user entering or exiting the geofence. For example, the mission control signal may trigger the mobile cleaning robot to initiate a particular mission in response to the indication of the user exiting the geofence (indicating the user is away from home). Additionally or alternatively, the mission control signal may trigger the mobile cleaning robot to abort, suspend, pause, postpone, or reschedule an unfinished mission in response to an indication of the user entering the geofence (indicating the user is returning home), such that the user would not be bothered (as per the user's preference) by the mobile robot moving around in an active mission upon returning home.

In addition to or in lieu of the location service and geofencing-based technique, the user being away from home or returning home may be detected using internet-connected devices (also referred to as smart devices) associated with the user's residence, examples of which may include smart TVs, smart speakers, toys, wearables, smart air conditioning, smart thermostats, smart lighting, smart lock, smart garage, smart speaker, and other smart appliances. As discussed above with reference to FIG. 5A, one or more smart devices 540 may change respective device operating states indicative of the user entering or exiting the user's residence. The mobile device may include a smart home automation module that can interpret the change in device operating states and determine an occurrence of the user entering or exiting the home. This information may be received by the mobile cleaning robot, which can responsively generate a mission control signal to drive the mobile cleaning robot to perform a particular mission.

In some examples, the one or more of the smart devices may be networked and managed by a smart home ecosystem, such as the smart home ecosystem 550. The smart home ecosystem may generate alerts to a user when a connected smart device changes its operating state. Based on a change in operating states of one or more networked smart devices, the smart home ecosystem may detect an indication of the user entering or exiting the user's residence. The mobile cleaning robot, upon receiving such an indication, may responsively generate a mission control signal to drive the mobile cleaning robot to perform a particular mission. This information may be received by the mobile cleaning robot, which can responsively generate a mission control signal to drive the mobile cleaning robot to perform a particular mission. Examples of setting up and selecting between location service and geofencing-based home control routines, or smart device and home ecosystem-based home control routines, are illustrated in FIG. 6A.

One or more mission routines may be activated by the mission control signal. The user may create or modify a mission routine using, for example, a software application or web-based service available in the mobile device, such as a mobile application that enables the IFTTT service. By way of example and as discussed above with reference to FIG. 5A, the mission routines may include a Away-From-Home Routine, a Return-Home Routine, a Do-Not-Disturb Routine, or a Guest Routine. The Away-From-Home Routine my include a mission that can be triggered by an indication that the user leaves home (e.g., "Clean the living room and kitchen when I am away."). Examples of setting up a Away-From-Home Routine is illustrated in FIGS. 6B-6C. The Return-Home Routine may include a mission that can be triggered by an indication that the user arrives, or is about to arrive, at home (e.g., "Stop cleaning and return to dock when I am returning home."). Examples of setting up a Return-Home Routine is illustrated in FIG. 6E. The Do-Not-Disturb Routine may include instructions for the mobile cleaning robot to refrain from performing a mission or a specific robot action, or a temporary suspension, pause, or postpone of an unfinished cleaning mission. A user may schedule a Do-Not-Disturb Routine by specifying a "No-Run Time". Alternatively, the Do-Not-Disturb Routine can be conditional upon a specific user behavior (e.g., "Do not run a mission when I am in a phone call."). Examples of setting up a Do-Not-Disturb Routine is illustrated in FIG. 6F. The Guest Routine may include a mission to be performed during a pre-set time period which, in an example, can be shorter than that generally needed to complete the entire mission when the mobile robot operates in its typical cleaning mode. In some examples, the Guest Routine may include a time-boxed mission including one or more areas to be cleaned during the pre-set time window, which may be programmable or selectable by a user via a user interface of the mobile device. Examples of setting up a Guest Routine is illustrated in FIG. 6G. Because the time-boxed mission is constrained by a generally short pre-set time window, the mission may be left unfinished at the expiration of the boxed time. The mobile cleaning robot may, automatically or under a user control, operate in a turbo cleaning mode, as described above with reference to FIG. 5B, to avoid or reduce the chance of mission incompleteness, while maximizing visible areas cleaned under the time constraint.

In addition to or in lieu of generating a mission control signal based on the indication of the user entering or existing the geofence, in some examples, the mission control signal may be generated based on other trigger events or a specific user behavior, such as a doorbell ring, a phone ring, or user engagement in an audio-sensitive event such as attending a phone call, watching TV, listening to music, or having a conversation. The mission control signal may additionally or alternatively be generated based on a room occupancy state. The trigger events, user behavior, or room occupancy state may be detected by one or more smart devices associated with the user's residence. The mission control signal thus generated may be used to navigate the mobile cleaning robot to conduct one or more mission routines, such as a Do-Not-Disturb Routine.

At 750, the mobile cleaning robot may move about the environment of the user's residence, and conduct the mission in accordance with a mission routine. Information about the user about the user entering or exiting a pre-defined geographical zone, the operating status of the mobile cleaning robot, the mission routine being executed, or the mission progress, among other things, may be presented to the user on a user interface of the mobile device.

### Examples of Machine-Readable Medium for Robot Scheduling and Controlling

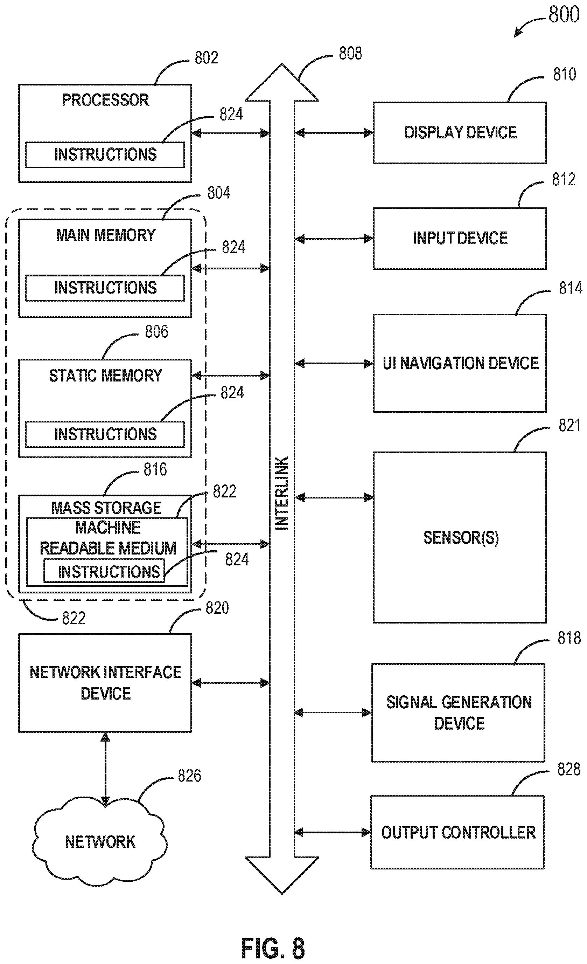

FIG. 8 illustrates generally a block diagram of an example machine 800 upon which any one or more of the techniques (e.g., methodologies) discussed herein may perform. Portions of this description may apply to the computing framework of various portions of the mobile robot 100, the mobile device 404, or other computing system such as a local computer system or the cloud computing system 406.

In alternative embodiments, the machine 800 may operate as a standalone device or may be connected (e.g., networked) to other machines. In a networked deployment, the machine 800 may operate in the capacity of a server machine, a client machine, or both in server-client network environments. In an example, the machine 800 may act as a peer machine in peer-to-peer (P2P) (or other distributed) network environment. The machine 800 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate by, logic or a number of components, or mechanisms. Circuit sets are a collection of circuits implemented in tangible entities that include hardware (e.g., simple circuits, gates, logic, etc.). Circuit set membership may be flexible over time and underlying hardware variability. Circuit sets include members that may, alone or in combination, perform specified operations when operating. In an example, hardware of the circuit set may be immutably designed to carry out a specific operation (e.g., hardwired). In an example, the hardware of the circuit set may include variably connected physical components (e.g., execution units, transistors, simple circuits, etc.) including a computer readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuit set in hardware via the variable connections to carry out portions of the specific operation when in operation. Accordingly, the computer readable medium is communicatively coupled to the other components of the circuit set member when the device is operating. In an example, any of the physical components may be used in more than one member of more than one circuit set. For example, under operation, execution units may be used in a first circuit of a first circuit set at one point in time and reused by a second circuit in the first circuit set, or by a third circuit in a second circuit set at a different time.

Machine (e.g., computer system) 800 may include a hardware processor 802 (e.g., a central processing unit (CPU), a graphics processing unit (GPU), a hardware processor core, or any combination thereof), a main memory 804 and a static memory 806, some or all of which may communicate with each other via an interlink (e.g., bus) 808. The machine 800 may further include a display unit 810 (e.g., a raster display, vector display, holographic display, etc.), an alphanumeric input device 812 (e.g., a keyboard), and a user interface (UI) navigation device 814 (e.g., a mouse). In an example, the display unit 810, input device 812 and UI navigation device 814 may be a touch screen display. The machine 800 may additionally include a storage device (e.g., drive unit) 816, a signal generation device 818 (e.g., a speaker), a network interface device 820, and one or more sensors 821, such as a global positioning system (GPS) sensor, compass, accelerometer, or other sensors. The machine 800 may include an output controller 828, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 816 may include a machine readable medium 822 on which is stored one or more sets of data structures or instructions 824 (e.g., software) embodying or utilized by any one or more of the techniques or functions described herein. The instructions 824 may also reside, completely or at least partially, within the main memory 804, within static memory 806, or within the hardware processor 802 during execution thereof by the machine 800. In an example, one or any combination of the hardware processor 802, the main memory 804, the static memory 806, or the storage device 816 may constitute machine readable media.

While the machine-readable medium 822 is illustrated as a single medium, the term "machine readable medium" may include a single medium or multiple media (e.g., a centralized or distributed database, and/or associated caches and servers) configured to store the one or more instructions 824.

The term "machine readable medium" may include any medium that is capable of storing, encoding, or carrying instructions for execution by the machine 800 and that cause the machine 800 to perform any one or more of the techniques of the present disclosure, or that is capable of storing, encoding or carrying data structures used by or associated with such instructions. Non-limiting machine-readable medium examples may include solid-state memories, and optical and magnetic media. In an example, a massed machine-readable medium comprises a machine readable medium with a plurality of particles having invariant (e.g., rest) mass. Accordingly, massed machine-readable media are not transitory propagating signals. Specific examples of massed machine-readable media may include: non-volatile memory, such as semiconductor memory devices (e.g., Electrically Programmable Read-Only Memory (EPROM), Electrically Erasable Programmable Read-Only Memory (EPSOM)) and flash memory devices, magnetic disks, such as internal hard disks and removable disks; magneto-optical disks; and CD-ROM and DVD-ROM disks.

The instructions 824 may further be transmitted or received over a communication network 826 using a transmission medium via the network interface device 820 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as WiFi^{®}, IEEE 802.16 family of standards known as WiMax^{®}), IEEE 802.15.4 family of standards, peer-to-peer (P2P) networks, among others. In an example, the network interface device 820 may include one or more physical jacks (e.g., Ethernet, coaxial, or phone jacks) or one or more antennas to connect to the communication network 826. In an example, the network interface device 820 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 800, and includes digital or analog communications signals or other intangible medium to facilitate communication of such software.

Various embodiments are illustrated in the figures above. One or more features from one or more of these embodiments may be combined to form other embodiments.

The method examples described herein can be machine or computer-implemented at least in part. Some examples may include a computer-readable medium or machine-readable medium encoded with instructions operable to configure an electronic device or system to perform methods as described in the above examples. An implementation of such methods may include code, such as microcode, assembly language code, a higher-level language code, or the like. Such code may include computer readable instructions for performing various methods. The code can form portions of computer program products. Further, the code can be tangibly stored on one or more volatile or non-volatile computer-readable media during execution or at other times.

The above detailed description is intended to be illustrative, and not restrictive. The scope of the disclosure should therefore be determined with references to the appended claims, along with the full scope of equivalents to which such claims are entitled.

## Claims

1. A mobile cleaning robot (100; 408; 510), comprising:
a drive system (514) configured to move the mobile cleaning robot about an environment in a user's residence; and
a controller circuit (109; 512) configured to:
receive an indication of a user entering or exiting a pre-defined geographical zone (617) with respect to a location of the user's residence; and
generate a mission control signal to navigate the mobile cleaning robot to conduct a mission in the environment based on the indication of the user entering or exiting the pre-defined geographical zone,
**characterized in that**:
the indication of the user entering or exiting the pre-defined geographical zone includes an indication of a mobile device (404; 520), holdable by the user, entering or
exiting the pre-defined geographical zone.

2. The mobile cleaning robot of claim 1, wherein the controller circuit is configured to receive information about a geographical location of the mobile device, and to generate the indication of the user entering or exiting the pre-defined geographical zone based on the geographical location of the mobile device relative to the pre-defined geographical zone.

3. The mobile cleaning robot of claim 2, wherein the pre-defined geographical zone includes a circular zone with a user-defined radius centered on the location of the user's residence, or wherein the pre-defined geographical zone includes user-defined boundaries around the location of the user's residence.

4. The mobile cleaning robot of any of claims 1-3, wherein the controller circuit is configured to, in response to the indication of the user exiting the pre-defined geographical zone, generate a mission control signal to trigger the mobile cleaning robot to initiate the mission.

5. The mobile cleaning robot of any of claims 1-4, wherein the controller circuit is configured to, in response to the indication of the user entering the pre-defined geographical zone, generate a mission control signal to trigger the mobile cleaning robot to continue, abort, or suspend a presently unfinished mission, or to postpone the presently unfinished mission to a subsequently scheduled time.

6. The mobile cleaning robot of claim 5 wherein the controller circuit is configured to, in response to the indication of the user entering the pre-defined geographical zone, generate a mission control signal to trigger the mobile cleaning robot to continue the presently unfinished mission for a specific time based on an estimated time of completing the mission or a portion thereof.

7. The mobile cleaning robot of any of claims 1-6, operatively in communication with one or more internet-connected devices associated with the user's residence,
wherein the controller circuit is configured to generate the mission control signal to trigger the mobile cleaning robot to conduct the mission based on respective operating states of the one or more internet-connected devices (525; 540), the respective operating states indicative of the user entering or exiting the user's residence.

8. The mobile cleaning robot of any of claims 1-7, operatively in communication with a home automation system configure to network one or more internet-connected devices associated with the user's residence and to detect the indication of the user entering or exiting the user's residence,
wherein the controller circuit is configured to generate the mission control signal to trigger the mobile cleaning robot to conduct the mission based on the indication of the user entering or exiting the user's residence detected by the home automation system.

9. The mobile cleaning robot of any of claims 1-8, operatively in communication with a voice-controlled home assistant device configured to receive a voice command (632) of the user,
wherein the controller circuit is configured to generate the mission control signal to trigger the mobile cleaning robot to conduct the mission in accordance with the voice command of the user.

10. The mobile cleaning robot of any of claims 1-9, wherein the controller circuit is configured to receive a no-run time (NRT) programmable by a user via a mobile device, and to generate a mission control signal to prevent the mobile cleaning robot from conducting a mission or performing a specific action during the NRT.

11. The mobile cleaning robot of any of claims 1-10, wherein the controller circuit is configured to:
detect an audio-based event in the environment based on information about respective operating states of one or more internet-connected devices associated with the user's residence; and
generate the mission control signal to suspend or postpone the mission or to prevent the mobile cleaning robot from performing a specific action in response to the detected audio-based event.

12. The mobile cleaning robot of claim 11, wherein the controller circuit is configured to generate the mission control signal to prevent the mobile cleaning robot from performing an action producing a noise level interfering from the detected audio-based event.

13. The mobile cleaning robot of any of claims 1-12, wherein the controller circuit is configured to:
detect an occupancy state of a target area in the environment based on information about respective operating states of one or more internet-connected devices (525; 540) associated with the user's residence; and
generate the mission control signal to suspend or postpone the mission or to prevent the mobile cleaning robot from performing a specific action in the target area if the detected occupancy state indicates the target area is occupied by a person.

14. A non-transitory machine-readable storage medium that includes instructions that, when executed by one or more processors of a machine, cause the machine to perform operations comprising:
establishing communication between a mobile device (404; 520) holdable by a user and a mobile cleaning robot (100; 408; 510) according to claim 1, configured to move about an environment
in a user's residence;
determining a geographical location of the mobile device;
detecting an indication of the user entering or exiting a pre-defined geographical zone (617) with respect to a location of the user's residence based on the determined geographical location of the mobile device; and
based on the detected indication of the user entering or exiting a pre-defined geographical zone, generating a mission control signal to navigate the mobile cleaning robot to conduct a mission in the environment.

15. A mobile robot system, comprising:
a mobile cleaning robot (100; 408; 510) according to any one of claims 1 to 12; and
the mobile device (404; 520), holdable by a user, communicatively coupled to the mobile cleaning robot, the mobile device configured to determine a geographical location of the mobile device, and to detect an indication of the user entering or exiting a pre-defined geographical zone (617) with respect to a location of the user's residence based on the geographical location of the mobile device.

## Patentansprüche

1. Mobiler Reinigungsroboter (100; 408; 510), umfassend:
ein Antriebssystem (514), das zum Bewegen des mobilen Reinigungsroboters in einer Umgebung in dem Wohnort eines Benutzers ausgelegt ist; und
eine Steuerschaltung (109; 512), die ausgelegt ist zum:
Empfangen einer Angabe eines Benutzers, der in eine vordefinierte geografische Zone (617) eintritt oder diese verlässt, in Bezug auf einen Ort des Wohnorts des Benutzers und
Erzeugen eines Auftragssteuersignals zum Navigieren des mobilen Reinigungsroboters zum Durchführen eines Auftrags in der Umgebung basierend auf der Angabe des Benutzers, der in die vordefinierte geografische Zone eintritt oder diese verlässt,
**dadurch gekennzeichnet, dass**
die Angabe des Benutzers, der in die vordefinierte geografische Zone eintritt oder
diese verlässt, eine Angabe einer mobilen Vorrichtung (404; 520), die durch den Benutzer haltbar ist und in die vordefinierte geografische Zone eintritt oder diese verlässt, einschließt.

2. Mobiler Reinigungsroboter nach Anspruch 1, wobei die Steuerschaltung zum Empfangen von Informationen über einen geografischen Ort der mobilen Vorrichtung und zum Erzeugen der Angabe des Benutzers, der in die vordefinierte geografische Zone eintritt oder diese verlässt, basierend auf dem geografischen Ort der mobilen Vorrichtung bezogen auf die vordefinierte geografische Zone ausgelegt ist.

3. Mobiler Reinigungsroboter nach Anspruch 2, wobei die vordefinierte geografische Zone eine Kreiszone mit einem benutzerdefinierten Radius, der am Ort des Wohnorts des Benutzers zentriert ist, einschließt oder wobei die vordefinierte geografische Zone benutzerdefinierte Grenzen um den Ort des Wohnorts des Benutzers einschließt.

4. Mobiler Reinigungsroboter nach einem der Ansprüche 1-3, wobei die Steuerschaltung zum Erzeugen, als Reaktion auf die Angabe des Benutzers, der die vordefinierte geografische Zone verlässt, eines Auftragssteuersignals zum Auslösen, dass der mobile Reinigungsroboter den Auftrag initiiert, ausgelegt ist.

5. Mobiler Reinigungsroboter nach einem der Ansprüche 1-4, wobei die Steuerschaltung zum Erzeugen, als Reaktion auf die Angabe des Benutzers, der die vordefinierte geografische Zone verlässt, eines Auftragssteuersignals zum Auslösen, dass der mobile Reinigungsroboter einen aktuell unbeendeten Auftrag fortsetzt, abbricht oder unterbricht, oder zum Verschieben des aktuell unbeendeten Auftrags auf eine anschließend geplante Zeit ausgelegt ist.

6. Mobiler Reinigungsroboter nach Anspruch 5, wobei die Steuerschaltung zum Erzeugen, als Reaktion auf die Angabe des Benutzers, der die vordefinierte geografische Zone verlässt, eines Auftragssteuersignals zum Auslösen, dass der mobile Reinigungsroboter den aktuell unbeendeten Auftrag für eine spezifische Zeit basierend auf einer geschätzten Zeit des Abschließens des Auftrags oder eines Abschnitts davon fortsetzt, ausgelegt ist.

7. Mobiler Reinigungsroboter nach einem der Ansprüche 1-6, operativ in Kommunikation mit einer oder mehreren internetverbundenen Vorrichtungen, die dem Wohnort des Benutzers zugeordnet sind, wobei die Steuerschaltung zum Erzeugen des Auftragssteuersignals zum Auslösen, dass der mobile Reinigungsroboter den Auftrag basierend auf jeweiligen Betriebszuständen der einen oder der mehreren internetverbundenen Vorrichtungen (525; 540) durchführt, ausgelegt ist, wobei die jeweiligen Betriebszustände den Benutzer, der in den Wohnort des Benutzers eintritt oder diese verlässt, angeben.

8. Mobiler Reinigungsroboter nach einem der Ansprüche 1-7, operativ in Kommunikation mit einem Hausautomationssystem, das zum Vernetzen einer oder mehrerer internetverbundener Vorrichtungen, die dem Wohnort des Benutzers zugeordnet sind, und zum Detektieren der Angabe des Benutzers, der in den Wohnort des Benutzers eintritt oder diese verlässt, ausgelegt ist,
wobei die Steuerschaltung zum Erzeugen des Auftragssteuersignals zum Auslösen, dass der mobile Reinigungsroboter den Auftrag basierend auf der durch das Hausautomationssystem detektierten Angabe des Benutzers, der in den Wohnort des Benutzers eintritt oder diese verlässt, durchführt, ausgelegt ist.

9. Mobiler Reinigungsroboter nach einem der Ansprüche 1-8, operativ in Kommunikation mit einer sprachgesteuerten Home Assistant-Vorrichtung, die zum Empfangen eines Sprachbefehls (632) des Benutzers ausgelegt ist,
wobei die Steuerschaltung zum Erzeugen des Auftragssteuersignals zum Auslösen, dass der mobile Reinigungsroboter den Auftrag gemäß dem Sprachbefehl des Benutzers durchführt, ausgelegt ist.

10. Mobiler Reinigungsroboter nach einem der Ansprüche 1-9, wobei die Steuerschaltung zum Empfangen einer Nichtlaufzeit (NRT), die durch einen Benutzer über eine mobile Vorrichtung programmierbar ist, und zum Erzeugen eines Auftragssteuersignals zum Verhindern, dass der mobile Reinigungsroboter einen Auftrag durchführt oder eine spezifische Aktion während der NRT durchführt, ausgelegt ist.

11. Mobiler Reinigungsroboter nach einem der Ansprüche 1-10, wobei die Steuerschaltung ausgelegt ist zum:
Detektieren eines audiobasierten Ereignisses in der Umgebung basierend auf Informationen über jeweilige Betriebszustände einer oder mehrerer internetverbundener Vorrichtungen, die dem Wohnort des Benutzers zugeordnet sind; und
Erzeugen des Auftragssteuersignals zum Unterbrechen oder Verschieben des Auftrags oder zum Verhindern, dass der mobile Reinigungsroboter eine spezifische Aktion durchführt, als Reaktion auf das detektierte audiobasierte Ereignis.

12. Mobiler Reinigungsroboter nach Anspruch 11, wobei die Steuerschaltung zum Erzeugen des Auftragssteuersignals zum Verhindern, dass der mobile Reinigungsroboter eine Aktion durchführt, die einen Rauschpegel erzeugt, der das detektierte audiobasierte Ereignis stört, ausgelegt ist.

13. Mobiler Reinigungsroboter nach einem der Ansprüche 1-12, wobei die Steuerschaltung ausgelegt ist zum:
Detektieren eines Belegungszustands eines Zielbereichs in der Umgebung basierend auf Informationen über jeweilige Betriebszustände einer oder mehrerer internetverbundener Vorrichtungen (525; 540), die dem Wohnort des Benutzers zugeordnet sind; und
Erzeugen des Auftragssteuersignals zum Unterbrechen oder Verschieben des Auftrags oder zum Verhindern, dass der mobile Reinigungsroboter eine spezifische Aktion im Zielbereich durchführt, wenn der detektierte Belegungszustand angibt, dass der Zielbereich durch eine Person belegt ist.

14. Nicht transitorisches maschinenlesbares Speicherungsmedium, das Anweisungen einschließt, die bei Ausführung durch einen oder mehrere Prozessoren einer Maschine die Maschine zum Durchführen von Vorgängen veranlassen, die umfassen:
Herstellen einer Kommunikation zwischen einer mobilen Vorrichtung (404; 520), die durch einen Benutzer haltbar ist, und einem mobilen Reinigungsroboter (100; 408; 510) nach Anspruch 1, der dazu ausgelegt ist, sich in einer Umgebung in dem Wohnort eines Benutzers zu bewegen;
Bestimmen eines geografischen Orts der mobilen Vorrichtung;
Detektieren einer Angabe des Benutzers, der in eine vordefinierte geografische Zone (617) eintritt oder diese verlässt, in Bezug auf einen Ort des Wohnorts des Benutzers basierend auf dem bestimmten geografischen Ort der mobilen Vorrichtung und basierend auf der detektierten Angabe des Benutzers, der in eine vordefinierte geografische Zone eintritt oder diese verlässt, Erzeugen eines Auftragssteuersignals zum Navigieren des mobilen Reinigungsroboters zum Durchführen eines Auftrags in der Umgebung.

15. System mit mobilem Roboter, umfassend:
einen mobilen Roboter (100; 408; 510) nach einem der Ansprüche 1 bis 12 und
die mobile Vorrichtung (404; 520), die durch einen Benutzer haltbar und kommunikativ an den mobilen Reinigungsroboter gekoppelt ist, wobei die mobile Vorrichtung zum Bestimmen eines geografischen Orts der mobilen Vorrichtung und zum Detektieren einer Angabe des Benutzers, der in eine vordefinierte geografische Zone (617) eintritt oder diese verlässt, in Bezug auf einen Ort des Wohnorts des Benutzers basierend auf dem geografischen Ort der mobilen Vorrichtung ausgelegt ist.

## Revendications

1. Robot mobile de nettoyage (100 ; 408 ; 510) comportant :
un système d'entraînement (514) configuré pour déplacer le robot mobile de nettoyage dans un environnement au domicile d'un utilisateur ; et
un circuit de contrôleur (109 ; 512) configuré pour :
recevoir une indication du fait qu'un utilisateur entre dans une zone géographique prédéfinie ou en sort (617), liée à un emplacement du domicile de l'utilisateur ; et
générer un signal de commande de mission pour diriger le robot mobile de nettoyage pour lui faire effectuer une mission dans l'environnement sur la base de l'indication du fait que l'utilisateur entre dans la zone géographique prédéfinie ou en sort,
**caractérisé en ce que** :
l'indication du fait que l'utilisateur entre dans la zone géographique prédéfinie ou
en sort contient une indication du fait qu'un dispositif mobile (404 ; 520), pouvant être tenu par l'utilisateur, entre dans la zone géographique prédéfinie ou en sort.

2. Robot mobile de nettoyage selon la revendication 1, dans lequel le circuit de contrôleur est configuré pour recevoir une information concernant un emplacement géographique du dispositif mobile et pour générer l'indication du fait que l'utilisateur entre dans la zone géographique prédéfinie ou en sort sur la base de l'emplacement géographique du dispositif mobile par rapport à la zone géographique prédéfinie.

3. Robot mobile de nettoyage selon la revendication 2, dans lequel la zone géographique prédéfinie contient une zone circulaire de rayon défini par l'utilisateur, centrée sur l'emplacement du domicile de l'utilisateur, ou dans lequel la zone géographique prédéfinie contient des limites définies par l'utilisateur autour de l'emplacement du domicile de l'utilisateur.

4. Robot mobile de nettoyage selon l'une quelconque des revendications 1 à 3, dans lequel le circuit de contrôleur est configuré pour, en réponse à l'indication du fait que l'utilisateur sort de la zone géographique prédéfinie, générer un signal de commande de mission pour déclencher le robot mobile de nettoyage pour lui faire démarrer la mission.

5. Robot mobile de nettoyage selon l'une quelconque des revendications 1 à 4, dans lequel le circuit de contrôleur est configuré pour, en réponse à l'indication du fait que l'utilisateur entre dans la zone géographique prédéfinie, générer un signal de commande de mission pour déclencher le robot mobile de nettoyage pour lui faire continuer, abandonner ou suspendre une mission actuellement inachevée, ou pour reporter la mission actuellement inachevée à un moment planifié ultérieurement.

6. Robot mobile de nettoyage selon la revendication 5, dans lequel le circuit de contrôleur est configuré pour, en réponse à l'indication du fait que l'utilisateur entre dans la zone géographique prédéfinie, générer un signal de commande de mission pour déclencher le robot mobile de nettoyage pour lui faire continuer la mission actuellement inachevée pendant une durée spécifiée sur la base d'une estimation de la durée nécessaire pour terminer la mission ou une partie de celle-ci.

7. Robot mobile de nettoyage selon l'une quelconque des revendications 1 à 6, en communication opérationnelle avec un ou plusieurs dispositifs connectés à Internet associés au domicile de l'utilisateur, dans lequel le circuit de contrôleur est configuré pour générer le signal de commande de mission pour déclencher le robot mobile de nettoyage pour lui faire effectuer la mission sur la base des états de fonctionnement respectifs des un ou plusieurs dispositifs connectés à Internet (525 ; 540), les états de fonctionnement respectifs indiquant que l'utilisateur entre dans le domicile de l'utilisateur ou en sort.

8. Robot mobile de nettoyage selon l'une quelconque des revendications 1 à 7, en communication opérationnelle avec un système d'automatisation domestique configuré pour mettre en réseau un ou plusieurs dispositifs connectés à Internet associés au domicile de l'utilisateur et pour détecter l'indication du fait que l'utilisateur entre dans le domicile de l'utilisateur ou en sort,
dans lequel le circuit de contrôleur est configuré pour générer le signal de commande de mission pour déclencher le robot mobile de nettoyage pour lui faire effectuer la mission sur la base de l'indication du fait que l'utilisateur entre dans le domicile de l'utilisateur ou en sort, détectée par le système d'automatisation domestique.

9. Robot mobile de nettoyage selon l'une quelconque des revendications 1 à 8, en communication opérationnelle avec un dispositif de type assistant domestique à commande vocale configuré pour recevoir une commande vocale (632) de l'utilisateur,
dans lequel le circuit de contrôleur est configuré pour générer le signal de commande de mission pour déclencher le robot mobile de nettoyage pour lui faire effectuer la mission correspondant à la commande vocale de l'utilisateur.

10. Robot mobile de nettoyage selon l'une quelconque des revendications 1 à 9, dans lequel le circuit de contrôleur est configuré pour recevoir une période sans exécution (NRT) programmable par un utilisateur par l'intermédiaire d'un dispositif mobile, et pour générer un signal de commande de mission pour empêcher le robot mobile de nettoyage d'effectuer une mission ou de réaliser une action particulière durant la NRT.

11. Robot mobile de nettoyage selon l'une quelconque des revendications 1 à 10, dans lequel le circuit de contrôleur est configuré pour :
détecter un événement de type audio dans l'environnement sur la base d'une information concernant les états de fonctionnement respectifs d'un ou plusieurs dispositifs connectés à Internet associés au domicile de l'utilisateur ; et
générer le signal de commande de mission pour suspendre ou reporter la mission ou pour empêcher le robot mobile de nettoyage d'effectuer une action particulière en réponse à l'événement de type audio détecté.

12. Robot mobile de nettoyage selon la revendication 11, dans lequel le circuit de contrôleur est configuré pour générer le signal de commande de mission pour empêcher le robot mobile de nettoyage d'effectuer une action produisant un niveau de bruit interférant avec l'événement de type audio détecté.

13. Robot mobile de nettoyage selon l'une quelconque des revendications 1 à 12, dans lequel le circuit de contrôleur est configuré pour :
détecter un état d'occupation d'une zone cible dans l'environnement sur la base d'une information concernant les états de fonctionnement respectifs d'un ou
plusieurs dispositifs connectés à Internet (525 ; 540) associés au domicile de l'utilisateur ; et
générer le signal de commande de mission pour suspendre ou reporter la mission ou pour empêcher le robot mobile de nettoyage d'effectuer une action particulière dans la zone cible si l'état d'occupation détecté indique que la zone cible est occupée par une personne.

14. Support de stockage non transitoire lisible par machine qui contient des instructions qui, lorsqu'elles sont exécutées par un ou plusieurs processeurs d'une machine, amènent la machine à effectuer des opérations comprenant :
établir une communication entre un dispositif mobile (404 ; 520), pouvant être tenu par un utilisateur, et un robot mobile de nettoyage (100 ; 408 ; 510) selon la revendication 1, configuré pour se déplacer dans un environnement du domicile de l'utilisateur ;
déterminer un emplacement géographique du dispositif mobile ;
détecter une indication du fait que l'utilisateur entre dans une zone géographique prédéfinie ou en sort (617), liée à un emplacement du domicile de l'utilisateur, sur la base de l'emplacement géographique déterminé pour le dispositif mobile ; et
sur la base de la détection de l'indication du fait que l'utilisateur entre dans une zone géographique prédéfinie ou en sort, générer un signal de commande de mission pour diriger le robot mobile de nettoyage pour lui faire effectuer une mission dans l'environnement.

15. Système robotisé mobile, comprenant :
un robot mobile de nettoyage (100 ; 408 ; 510) selon l'une quelconque des revendications 1 à 12 ; et
le dispositif mobile (404 ; 520), pouvant être tenu par l'utilisateur, couplé au robot mobile de nettoyage par des communications, le dispositif mobile étant configuré pour déterminer un emplacement géographique du dispositif mobile et pour détecter une indication du fait que l'utilisateur entre dans une zone géographique prédéfinie ou en sort (617), liée à un emplacement du domicile de l'utilisateur, sur la base de l'emplacement géographique du dispositif mobile.
